(19) Europäisches Patentamt
European Patent Office
Office européen des brevets

(11) EP 3 943 556 A1

(12) EUROPEAN PATENT APPLICATION
published in accordance with Art. 153(4) EPC

(43) Date of publication:
**26.01.2022 Bulletin 2022/04**

(21) Application number: **20774372.5**

(22) Date of filing: **13.03.2020**

(51) International Patent Classification (IPC):
***C09B 47/20*** (2006.01) ***B41J 2/01*** (2006.01)
***C09D 11/328*** (2014.01) ***C09D 11/38*** (2014.01)
***B41M 5/00*** (2006.01) ***C09B 67/20*** (2006.01)
***C09B 67/44*** (2006.01)

(52) Cooperative Patent Classification (CPC):
**C09B 67/0033; C09B 47/20; C09D 11/328; C09D 11/38**

(86) International application number:
**PCT/JP2020/011296**

(87) International publication number:
**WO 2020/189589 (24.09.2020 Gazette 2020/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.03.2019 JP 2019053700**
**28.06.2019 JP 2019122360**

(71) Applicant: **FUJIFILM Corporation**
**Tokyo 106-8620 (JP)**

(72) Inventors:
- **TATEISHI Keiichi**
**Ashigarakami-gun, Kanagawa 258-8577 (JP)**
- **SAITOU Takashi**
**Ashigarakami-gun, Kanagawa 258-8577 (JP)**
- **SAKAI Yusuke**
**Ashigarakami-gun, Kanagawa 258-8577 (JP)**
- **TAKASAKI Yuta**
**Ashigarakami-gun, Kanagawa 258-8577 (JP)**

(74) Representative: **Klunker IP**
**Patentanwälte PartG mbB**
**Destouchesstraße 68**
**80796 München (DE)**

# (54) DYE INK COMPOSITION, DYE INK FOR INK JET RECORDING, AND INK JET RECORDING METHOD

(57) The present invention provides: a dye ink composition which contains a phthalocyanine dye that has a specific substituent at the β-position, water, and a compound that has a specific structure; a dye ink for inkjet recording, which contains the above-described dye ink composition; and an inkjet recording method which uses the above-described ink composition.

EP 3 943 556 A1

## Description

## BACKGROUND OF THE INVENTION

1. Field of the Invention

The present invention relates to a dye ink composition, a dye ink for ink jet recording, and an ink jet recording method.

2. Description of the Related Art

An ink jet recording method is advantageous in that the material cost is lower than that of other recording methods, high-speed recording is possible, noises during recording are small, furthermore, the process is simple, full-color printing is easily achieved, and high-resolution images are obtained even with an apparatus having a simple configuration. Therefore, the ink jet recording method is becoming common and spreading from personal use to office use and in the fields of commercial printing and industrial printing.

In such an ink jet recording method, there are two types of coloring agents used in ink jet inks, namely, dyes and pigments, and these coloring agents are each widely used as an ink jet colorant. It is known that, in general, since dyes have low durability to light and ozone gas and are soluble in water, recording materials after printing have low resistance to water. On the other hand, pigments are known to have high fastness, such as light resistance, resistance to ozone gas, and water resistance. However, pigments are insoluble in water and thus have a drawback in that once a pigment becomes dry and aggregates, the pigment cannot be dispersed in water again, which is likely to cause trouble.

In the ink jet recording method, besides, for example, ink jet paper and ink jet glossy paper that have an ink-receiving layer, general-purpose plain paper having low water absorbency and the like are used as recording materials in some cases. In ink jet printing for office use, plain paper is mainly used as a recording medium, and high image density is required. Such a recording material does not positively include an absorbing layer and an ink is less likely to penetrate into the recording material, and thus it takes a long time for drying. For example, in the case of high-speed automatic double-sided printing, in which a sheet having a front surface that has been subjected to printing is immediately reversed and back-surface printing is performed in an ink jet printing apparatus, there may be a problem in that, for example, inversion rollers are contaminated with an undried ink. It is also known that an increase in the coloring agent concentration in an ink composition for the purpose of increasing the image density decreases stability of the ink. Furthermore, the coloring agent is deposited by drying near a nozzle, which may result in clogging of the nozzle. For example, when a pigment ink is printed on plain paper, a pigment penetrates into the paper without staying on the surface of the paper, and thus the pigment density on the surface of the paper decreases, and the image density decreases. If the pigment concentration in the ink is increased, the image density increases. However, the viscosity of the ink increases, resulting in a decrease in ejection stability. Therefore, there has been a high demand for an ink jet recording method that achieves quick drying, high image density, high image quality, and high durability even on a recording material that does not have an ink-receiving layer, such as plain paper.

Recently, in order to extend the field of use (application to photographs and application to documents) of a printing method that utilizes features of dye inks, it has been essential for dye ink compositions used for ink jet printing and color images colored with the dye ink compositions to achieve high printing density and high fastness, such as light resistance and water resistance. In particular, from the viewpoint of the operating cost (low material cost and being free of maintenance), more and more users switch from an electrophotographic recording method that uses color toners to an ink jet method, also for application to documents. Thus, together with application to high-image-quality photographs obtained with dye inks, printing properties (in particular, high printing density) on plain paper have been desired.

Compounds having a phthalocyanine skeleton that are widely used for application to cyan dye inks (for example, C.I. Direct Blue 86, 87, and 199) have low fastness to ozone gas in air. This is noticeable in, for example, recorded articles obtained by using a recording medium (ink jet paper) having an ink-receiving layer formed of an inorganic substance such as alumina or silica. If such a recorded article is left to stand in a room for a long time, there may be a problem of significant color fading. On the other hand, compounds having a triphenylmethane skeleton have a feature that they have color developability better than that of compounds having a phthalocyanine skeleton. Therefore, for the purpose of recording images having high printing density (color developability), a cyan ink that contains, as colorants, a phthalocyanine compound and a compound having a triphenylmethane skeleton, such as C.I. Acid Blue 9 has been proposed (JP1999-158424A (JP-H11-158424A)). However, the cyan dye ink disclosed in JP1999-158424A (JP-H11-158424A) cannot realize both the printing density (color developability) and image durability (ozone resistance and light resistance) and requires a further improvement.

For the purpose of escaping from the trade-off relation between the printing density (color developability) and image durability (ozone resistance and light resistance), it has been proposed that the two required performances are

achieved by mainly changing coloring agents (dyes) used for a cyan dye ink (JP2013-35922A and JP2013-221054A).

## SUMMARY OF THE INVENTION

However, although the cyan dye ink disclosed in JP2013-35922A can be confirmed to achieve an improvement in the printing density (color developability), the two required performances cannot be combined because a decrease in image durability (ozone resistance: yellow discoloration) on ink jet paper due to a partial azaphthalocyanine compound, a decrease in image durability (ozone resistance: decoloration) on ink jet paper, due to a phthalocyanine compound, and a decrease in image durability (light resistance) due to C.I. Acid Blue 9 are significant, and thus a further improvement is necessary. Similarly, although the cyan dye ink disclosed in JP2013-221054A can be confirmed to achieve an improvement in the printing density (color developability), the two required performances cannot be combined because a decrease in image durability (ozone resistance: yellow discoloration) on ink jet paper due to a partial azaphthalocyanine compound and a decrease in image durability (light resistance) due to C.I. Acid Blue 9 are significant, and thus a further improvement is necessary.

As described above, although cyan ink compositions including various coloring agents (water-soluble dyes) have been proposed, there is no cyan dye ink that satisfies, at a high level, the printing density (color developability) and image fastness (ozone resistance and light resistance) on ink jet paper and plain paper. In particular, there has been a high demand for a further improvement in the printing density of a cyan dye ink on plain paper.

In recent years, a further improvement in the performance has been desired in the field of inks. In particular, an improvement in the performance has been desired for application to documents that provide printing properties (in particular, high printing density) on plain paper as well as application to high-image quality, highly durable photographs obtained by using dye inks.

An object of the present invention is to provide a dye ink composition, a dye ink for ink jet recording, and an ink jet recording method that can form an image having high printing density (in particular, color developability on plain paper) and having high ozone resistance and high light resistance.

The inventors of the present invention have found that the above object can be achieved by the configurations described below.

[1] A dye ink composition containing a dye represented by the following general formula (I), water, and a compound represented by the following general formula (II).

General formula (I)

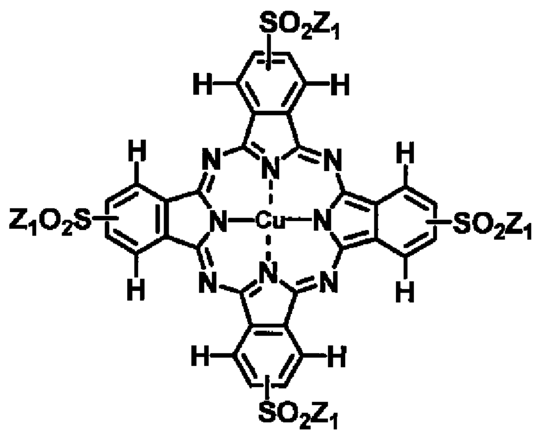

In the general formula (I), each $Z_1$ represents an alkyl group, a cycloalkyl group, an alkenyl group, an aralkyl group, an aryl group, or a heterocyclic group, the alkyl group, the cycloalkyl group, the alkenyl group, the aralkyl group, the aryl group, and the heterocyclic group having a substituent that includes at least an ionic hydrophilic group.

General formula (II)

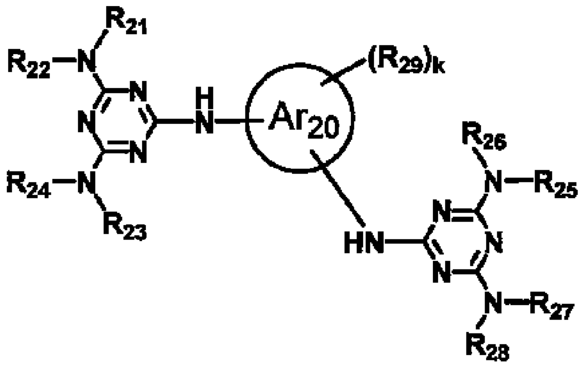

In the general formula (II), $Ar_{20}$ represents a benzene ring or a naphthalene ring; $R_{21}$ to $R_{28}$ each independently represent a hydrogen atom or a substituent; $R_{21}$ and $R_{22}$ may be linked to each other to form a ring; $R_{23}$ and $R_{24}$ may be linked to each other to form a ring; $R_{25}$ and $R_{26}$ may be linked to each other to form a ring; $R_{27}$ and $R_{28}$ may be linked to each other to form a ring; $R_{29}$ represents a substituent; in a case where $Ar_{20}$ represents the benzene ring, k represents an integer of 0 to 4; in a case where $Ar_{20}$ represents the naphthalene ring, k represents an integer of 0 to 6; in a case where a plurality of $R_{29}$'s are present, the plurality of $R_{29}$'s may be the same as or different from each other; and in a case where a plurality of $R_{29}$'s are present, the plurality of $R_{29}$'s may be linked to each other to form a ring, and the compound represented by the general formula (II) has at least one hydrophilic group.

[2] The dye ink composition according to [1], further containing a toning agent represented by the following general formula (Cy-1).

（Ｃｙ－１）

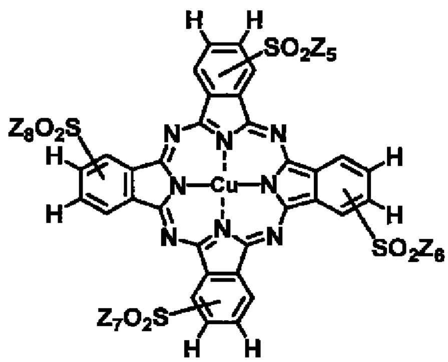

In the general formula (Cy-1), $Z_5$, $Z_6$, $Z_7$, and $Z_8$ each independently represent a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group; and at least one of $Z_5$, $Z_6$, $Z_7$, or $Z_8$ has a substituent that includes an ionic hydrophilic group.

[3] The dye ink composition according to [1] or [2], further containing a toning agent represented by any of the following general formulae (Cy-2) to (Cy-5).

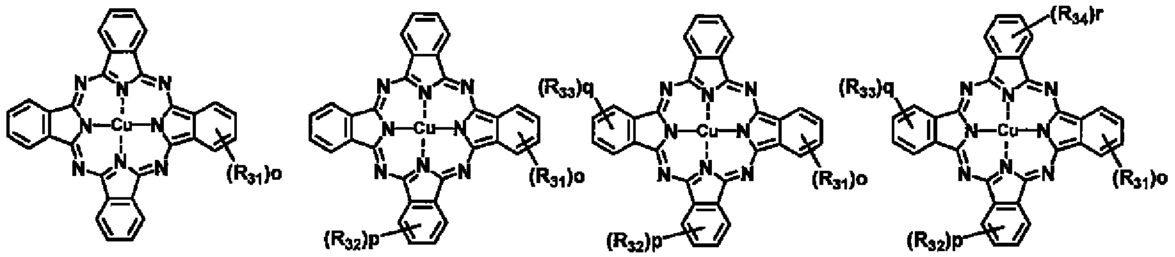

(Cy-2) (Cy-3) (Cy-4) (Cy-5)

In the general formulae (Cy-2) to (Cy-5), $R_{31}$, $R_{32}$, $R_{33}$, and $R_{34}$ each independently represent a substituted or unsubstituted sulfamoyl group, a substituted or unsubstituted carbamoyl group, a sulfo group, or a carboxy group; in a case where a plurality of $R_{31}$'s, $R_{32}$'s, $R_{33}$'s, or $R_{34}$'s are present, the plurality of $R_{31}$'s, $R_{32}$'s, $R_{33}$'s, or $R_{34}$'s may be the same as or different from each other; and o, p, q, and r each independently represent an integer of 1 to 4.

[4] The dye ink composition according to any one of [1] to [3], wherein the compound represented by the general formula (II) has at least one ionic hydrophilic group.

[5] The dye ink composition according to any one of [1] to [4], wherein at least any one of $R_{21}$ to $R_{29}$ in the general formula (II) has an ionic hydrophilic group.

[6] The dye ink composition according to any one of [1] to [5], wherein a content of the dye represented by the general formula (I) is 3.0% to 5.0% by mass with respect to a total mass of the dye ink composition, and the dye ink composition is a composition for a cyan dye ink.

[7] The dye ink composition according to any one of [1] to [6], wherein a content of the compound represented by the general formula (II) is 0.5% to 3.0% by mass with respect to a total mass of the dye ink composition, and the dye ink composition is a composition for a cyan dye ink.

[8] The dye ink composition according to any one of [1] to [7], further containing a chelating agent, wherein a content of the chelating agent is 0.001% to 0.3% by mass with respect to a total mass of the dye ink composition.

[9] A dye ink for ink jet recording, the dye ink including the dye ink composition according to any one of [1] to [8].

[10] An ink jet recording method using the dye ink for ink jet recording according to [9].

According to the present invention, it is possible to provide a dye ink composition, a dye ink for ink jet recording, and an ink jet recording method that can form an image having high printing density (in particular, color developability on plain paper) and having high ozone resistance and high light resistance.

## DESCRIPTION OF THE PREFERRED EMBODIMENTS

Hereafter, the present invention will be described in more detail with reference to preferred embodiments.

Dye Ink Composition

A dye ink composition according to the present invention is a dye ink composition containing a dye represented by the following general formula (I), water, and a compound represented by the following general formula (II).

General formula (I)

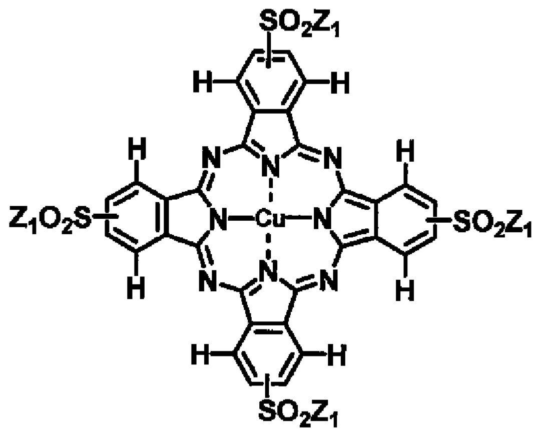

In the general formula (I), each $Z_1$ represents an alkyl group, a cycloalkyl group, an alkenyl group, an aralkyl group, an aryl group, or a heterocyclic group, the alkyl group, the cycloalkyl group, the alkenyl group, the aralkyl group, the aryl group, and the heterocyclic group having a substituent that includes at least an ionic hydrophilic group.

General formula (II)

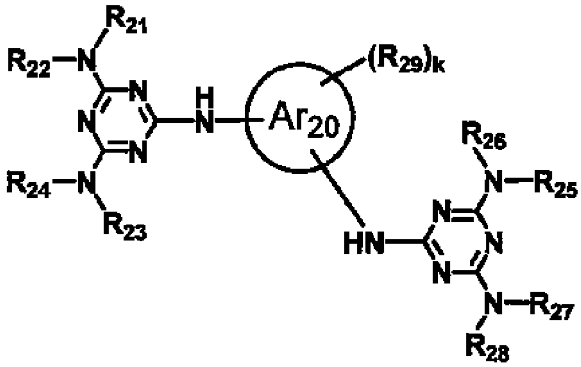

In the general formula (II), $Ar_{20}$ represents a benzene ring or a naphthalene ring. $R_{21}$ to $R_{28}$ each independently represent a hydrogen atom or a substituent. $R_{21}$ and $R_{22}$ may be linked to each other to form a ring. $R_{23}$ and $R_{24}$ may be linked to each other to form a ring. $R_{25}$ and $R_{26}$ may be linked to each other to form a ring. $R_{27}$ and $R_{28}$ may be linked to each other to form a ring. $R_{29}$ represents a substituent. In a case where $Ar_{20}$ represents the benzene ring, k represents an integer of 0 to 4. In a case where $Ar_{20}$ represents the naphthalene ring, k represents an integer of 0 to 6. In a case where a plurality of $R_{29}$'s are present, the plurality of $R_{29}$'s may be the same as or different from each other. In a case where a plurality of $R_{29}$'s are present, the plurality of $R_{29}$'s may be linked to form a ring. The compound represented by general formula (II) has at least one hydrophilic group.

The reason why the dye ink composition according to the present invention can form an image having high printing density (in particular, color developability on plain paper) and having high image durability (ozone resistance and light resistance) has not been completely clarified. However, the inventors of the present invention assume that the reason is as follows.

An image with a cyan hue can be formed by an ink jet method using a dye ink composition including the dye (water-soluble dye) represented by general formula (I). In the image immediately after formation, the dye represented by general formula (I) is considered to form a relatively stable (metastable) aggregation state of a phthalocyanine-based dye. Next, during drying of the dye ink composition, together with a change in the temperature and humidity of the surrounding environment, the highly water-soluble dye represented by general formula (I) is considered to proceed to a more stable dye aggregation state with the temperature and moisture serving as driving force (a change in the presence state such as the H-aggregate of a dye: a decrease in wavelength of the hue and a simultaneous decrease in the color value). It is assumed that, as a result, a reflection density of the formed image decreases (the printing density decreases).

Furthermore, in the case of inks using water-soluble phthalocyanine dyes, when a printed article is formed not on ink jet paper (that has, on resin coated paper serving as base paper, an image-receiving layer supported on porous

silica or alumina) but on plain paper (that does not have the image-receiving layer), the dye ink composition penetrates as it is in the thickness direction of the base paper. Therefore, if the amount of dye ink composition ejected in the form of droplets is the same, when droplets of the dye ink composition are ejected onto plain paper, the resulting image has a lower reflection density than that in the case where droplets of the dye ink composition are ejected onto ink jet paper.

In contrast, in the present invention, the addition of the compound represented by general formula (II), which is a compound having high planarity, to the dye ink composition enables the dye to be stabilized, from the relatively stable aggregation state of the dye represented by general formula (I), by the effect of the intermolecular interaction between the dye represented by general formula (I) and the compound represented by general formula (II) in an image immediately after formation by the ink jet recording method. As a result, high printing density (high color developability can be ensued) can be provided to a formed image (particularly on plain paper) without causing a significant decrease in the color value accompanied by the formation of a high-order aggregated state between dye molecules.

Furthermore, when a printed article is formed on plain paper, the dye ink composition having the intermolecular interaction with the compound (additive) represented by general formula (II) also interacts with, for example, cellulose fibers constituting base paper and is thereby less likely to penetrate as it is in the thickness direction of the base paper, and as a result, the reflection density is less likely to decrease. This is considered to be one mechanism by which high printing density could be realized.

In addition to the above, the dye represented by general formula (I) does not cause a chemical reaction by a change in the surrounding environment (temperature, humidity, light, and active gas), and discoloration of the cyan hue of an image can be suppressed. Thus, image durability (in particular, ozone resistance and light resistance) could be probably improved.

First, specific examples of substituents that the compounds according to the present invention can have are defined as a substituent group A. Specifically, the substituent group A includes the following substituents.

Substituent group A

The substituents include a halogen atom, an alkyl group, a cycloalkyl group, an aralkyl group, an alkenyl group, an alkynyl group, an aryl group, a heterocyclic group, a cyano group, a hydroxy group, a mercapto group, a nitro group, an alkyloxy group (an alkoxy group), an aryloxy group, a silyloxy group, a heterocyclic oxy group, an acyloxy group, a carbamoyloxy group, an alkyloxycarbonyloxy group, an aryloxycarbonyloxy group, an amino group, an acylamino group, an aminocarbonylamino group, an alkyloxycarbonylamino group, an aryloxycarbonylamino group, a sulfamoylamino group, an alkylsulfonylamino group, an arylsulfonylamino group, a heterocyclic sulfonylamino group, an alkylthio group, an arylthio group, a heterocyclic thio group, a sulfamoyl group, an alkylsulfinyl group, an arylsulfinyl group, a heterocyclic sulfinyl group, an alkylsulfonyl group, an arylsulfonyl group, a heterocyclic sulfonyl group, an acyl group, an alkyloxycarbonyl group, an aryloxycarbonyl group, a heterocyclic oxycarbonyl group, a carbamoyl group (an aminocarbonyl group), an arylazo group, a heterocyclic azo group, an imide group, a phosphino group, a phosphinyl group, a phosphinyloxy group, a phosphinylamino group, a silyl group, an ionic hydrophilic group, and a substituent that is a combination of two or more of these.

The halogen atom is, for example, a fluorine atom, a chlorine atom, a bromine atom, or an iodine atom.

The alkyl group is a linear or branched substituted or unsubstituted alkyl group. This concept of an alkyl group also applies to an alkyl group in substituents described below (for example, an alkyl group in an alkoxy group or alkylthio group).

The alkyl group is preferably an alkyl group having 1 to 30 carbon atoms, such as a methyl group, an ethyl group, a n-propyl group, an i-propyl group, a t-butyl group, a n-octyl group, an eicosyl group, a 2-chloroethyl group, a 2-cyanoethyl group, or a 2-ethylhexyl group.

The cycloalkyl group is a substituted or unsubstituted cycloalkyl group and preferably a substituted or unsubstituted cycloalkyl group having 3 to 30 carbon atoms, such as a cyclohexyl group, a cyclopentyl group, or a 4-n-dodecylcyclohexyl group. The bicycloalkyl group is preferably a substituted or unsubstituted bicycloalkyl group having 5 to 30 carbon atoms, specifically, a monovalent group formed by removing one hydrogen atom from a bicycloalkane having 5 to 30 carbon atoms, such as a bicyclo[1.2.2]heptan-2-yl group or a bicyclo[2.2.2]octan-3-yl group.

The aralkyl group is a substituted or unsubstituted aralkyl group. The substituted or unsubstituted aralkyl group is preferably an aralkyl group having 7 to 30 carbon atoms, such as a benzyl group or a 2-phenethyl group.

The alkenyl group is a linear, branched, or cyclic substituted or unsubstituted alkenyl group and includes a cycloalkenyl group and a bicycloalkenyl group.

The alkenyl group is preferably a substituted or unsubstituted alkenyl group having 2 to 30 carbon atoms, such as a vinyl group, an allyl group, a prenyl group, a geranyl group, or an oleyl group. The cycloalkenyl group is preferably a substituted or unsubstituted cycloalkenyl group having 3 to 30 carbon atoms, specifically, a monovalent group formed by removing one hydrogen atom from a cycloalkene having 3 to 30 carbon atoms, such as a 2-cyclopenten-1-yl group or a 2-cyclohexen-1-yl group. The bicycloalkenyl group is a substituted or unsubstituted bicycloalkenyl group and is

preferably a substituted or unsubstituted bicycloalkenyl group having 5 to 30 carbon atoms, specifically, a monovalent group formed by removing one hydrogen atom from a bicycloalkene having one double bond, such as a bicyclo[2.2.1]hept-2-en-1-yl group or a bicyclo[2.2.2]oct-2-en-4-yl group.

The alkynyl group is preferably a substituted or unsubstituted alkynyl group having 2 to 30 carbon atoms, such as an ethynyl group, a propargyl group, or a trimethylsilylethynyl group.

The aryl group is preferably a substituted or unsubstituted aryl group having 6 to 30 carbon atoms, such as a phenyl group, a p-tolyl group, a naphthyl group, a m-chlorophenyl group, or an o-hexadecanoylaminophenyl group.

The heterocyclic group is preferably a monovalent group formed by removing one hydrogen atom from a five- or six-membered substituted or unsubstituted aromatic or non-aromatic heterocyclic compound and more preferably a five- or six-membered aromatic heterocyclic group having 3 to 30 carbon atoms, such as a 2-furyl group, a 2-thienyl group, a 2-pyrimidinyl group, or a 2-benzothiazolyl group. An example of the non-aromatic heterocyclic group is a morpholinyl group.

The alkyloxy group is preferably a substituted or unsubstituted alkyloxy group having 1 to 30 carbon atoms, such as a methoxy group, an ethoxy group, an isopropoxy group, a t-butoxy group, a n-octyloxy group, or a 2-methoxyethoxy group.

The aryloxy group is preferably a substituted or unsubstituted aryloxy group having 6 to 30 carbon atoms, such as a phenoxy group, a 2-methylphenoxy group, a 4-t-butylphenoxy group, a 3-nitrophenoxy group, or a 2-tetradecanoylaminophenoxy group.

The silyloxy group is preferably a substituted or unsubstituted silyloxy group having 0 to 20 carbon atoms, such as a trimethylsilyloxy group or a diphenylmethylsilyloxy group.

The heterocyclic oxy group is preferably a substituted or unsubstituted heterocyclic oxy group having 2 to 30 carbon atoms, such as a 1-phenyltetrazole-5-oxy group or a 2-tetrahydropyranyloxy group.

The acyloxy group is preferably a formyloxy group, a substituted or unsubstituted alkylcarbonyloxy group having 2 to 30 carbon atoms, or a substituted or unsubstituted arylcarbonyloxy group having 6 to 30 carbon atoms, such as an acetyloxy group, a pivaloyloxy group, a stearoyloxy group, a benzoyloxy group, or a p-methoxyphenylcarbonyloxy group.

The carbamoyloxy group is preferably a substituted or unsubstituted carbamoyloxy group having 1 to 30 carbon atoms, such as an N,N-dimethylcarbamoyloxy group, an N,N-diethylcarbamoyloxy group, a morpholinocarbonyloxy group, an N,N-di-n-octylaminocarbonyloxy group, or an N-n-octylcarbamoyloxy group.

The alkyloxycarbonyloxy group is preferably a substituted or unsubstituted alkyloxycarbonyloxy group having 2 to 30 carbon atoms, such as a methoxycarbonyloxy group, an ethoxycarbonyloxy group, a t-butoxycarbonyloxy group, or a n-octyloxycarbonyloxy group.

The aryloxycarbonyloxy group is preferably a substituted or unsubstituted aryloxycarbonyloxy group having 7 to 30 carbon atoms, such as a phenoxycarbonyloxy group, a p-methoxyphenoxycarbonyloxy group, or a p-n-hexadecyloxyphenoxycarbonyloxy group.

The amino group includes an alkylamino group, an arylamino group, and a heterocyclic amino group. The amino group is preferably an amino group, a substituted or unsubstituted alkylamino group having 1 to 30 carbon atoms, or a substituted or unsubstituted anilino group having 6 to 30 carbon atoms, such as a methylamino group, a dimethylamino group, an anilino group, an N-methyl-anilino group, a diphenylamino group, or a triazinylamino group.

The acylamino group is preferably a formylamino group, a substituted or unsubstituted alkylcarbonylamino group having 1 to 30 carbon atoms, or a substituted or unsubstituted arylcarbonylamino group having 6 to 30 carbon atoms, such as an acetylamino group, a pivaloylamino group, a lauroylamino group, a benzoylamino group, or a 3,4,5-tri-n-octyloxyphenylcarbonylamino group.

The aminocarbonylamino group is preferably a substituted or unsubstituted aminocarbonylamino group having 1 to 30 carbon atoms, such as a carbamoylamino group, an N,N-dimethylaminocarbonylamino group, an N,N-diethylaminocarbonylamino group, or a morpholinocarbonylamino group.

The alkyloxycarbonylamino group is preferably a substituted or unsubstituted alkyloxycarbonylamino group having 2 to 30 carbon atoms, such as a methoxycarbonylamino group, an ethoxycarbonylamino group, a t-butoxycarbonylamino group, a n-octadecyloxycarbonylamino group, or an N-methyl-methoxycarbonylamino group.

The aryloxycarbonylamino group is preferably a substituted or unsubstituted aryloxycarbonylamino group having 7 to 30 carbon atoms, such as a phenoxycarbonylamino group, a p-chlorophenoxycarbonylamino group, or a m-n-octyloxyphenoxycarbonylamino group.

The sulfamoylamino group is preferably a substituted or unsubstituted sulfamoylamino group having 0 to 30 carbon atoms, such as a sulfamoylamino group, an N,N-dimethylaminosulfonylamino group, or an N-n-octylaminosulfonylamino group.

The alkylsulfonylamino group or the arylsulfonylamino group is preferably a substituted or unsubstituted alkylsulfonylamino group having 1 to 30 carbon atoms or a substituted or unsubstituted arylsulfonylamino group having 6 to 30 carbon atoms, such as a methylsulfonylamino group, a butylsulfonylamino group, a phenylsulfonylamino group, a 2,3,5-trichlorophenylsulfonylamino group, or a p-methylphenylsulfonylamino group.

The heterocyclic sulfonylamino group is preferably a substituted or unsubstituted heterocyclic sulfonylamino group having 1 to 12 carbon atoms, such as a 2-thiophenesulfonylamino group or a 3-pyridinesulfonylamino group.
The alkylthio group is preferably a substituted or unsubstituted alkylthio group having 1 to 30 carbon atoms, such as a methylthio group, an ethylthio group, or a n-hexadecylthio group.
The arylthio group is preferably a substituted or unsubstituted arylthio group having 6 to 30 carbon atoms, such as a phenylthio group, a p-chlorophenylthio group, or a m-methoxyphenylthio group.
The heterocyclic thio group is preferably a substituted or unsubstituted heterocyclic thio group having 2 to 30 carbon atoms, such as a 2-benzothiazolylthio group or a 1-phenyltetrazol-5-ylthio group.
The sulfamoyl group is preferably a substituted or unsubstituted sulfamoyl group having 0 to 30 carbon atoms, such as an N-ethylsulfamoyl group, an N-(3-dodecyloxypropyl)sulfamoyl group, an N,N-dimethylsulfamoyl group, an N-acetylsulfamoyl group, an N-benzoylsulfamoyl group, or an N-(N'-phenylcarbamoyl)sulfamoyl group.
The alkylsulfinyl group or the arylsulfinyl group is preferably a substituted or unsubstituted alkylsulfinyl group having 1 to 30 carbon atoms or a substituted or unsubstituted arylsulfinyl group having 6 to 30 carbon atoms, such as a methylsulfinyl group, an ethylsulfinyl group, a phenylsulfinyl group, or a p-methylphenylsulfinyl group.
The heterocyclic sulfinyl group is preferably a substituted or unsubstituted heterocyclic sulfinyl group having 1 to 20 carbon atoms, and an example of the heterocyclic sulfinyl group is a 4-pyridinesulfinyl group.
The alkylsulfonyl group or the arylsulfonyl group is preferably a substituted or unsubstituted alkylsulfonyl group having 1 to 30 carbon atoms or a substituted or unsubstituted arylsulfonyl group having 6 to 30 carbon atoms, such as a methylsulfonyl group, an ethylsulfonyl group, a phenylsulfonyl group, or a p-methylphenylsulfonyl group.
The heterocyclic sulfonyl group is preferably a substituted or unsubstituted heterocyclic sulfonyl group having 1 to 20 carbon atoms, such as a 2-thiophenesulfonyl group or a 3-pyridinesulfonyl group.
The acyl group is preferably a formyl group, a substituted or unsubstituted alkylcarbonyl group having 2 to 30 carbon atoms, a substituted or unsubstituted arylcarbonyl group having 7 to 30 carbon atoms, or a substituted or unsubstituted heterocyclic carbonyl group having 2 to 30 carbon atoms in which any of the carbon atoms is bound to a carbonyl group, such as an acetyl group, a pivaloyl group, a 2-chloroacetyl group, a stearoyl group, a benzoyl group, a p-n-octyloxyphenylcarbonyl group, a 2-pyridylcarbonyl group, or a 2-furylcarbonyl group.
The aryloxycarbonyl group is preferably a substituted or unsubstituted aryloxycarbonyl group having 7 to 30 carbon atoms, such as a phenoxycarbonyl group, an o-chlorophenoxycarbonyl group, a m-nitrophenoxycarbonyl group, or a p-t-butylphenoxycarbonyl group.
The alkoxycarbonyl group is preferably a substituted or unsubstituted alkoxycarbonyl group having 2 to 30 carbon atoms, such as a methoxycarbonyl group, an ethoxycarbonyl group, a t-butoxycarbonyl group, or a n-octadecyloxycarbonyl group.
The heterocyclic oxycarbonyl group is preferably a heterocyclic oxycarbonyl group having 2 to 20 carbon atoms, and an example of the heterocyclic oxycarbonyl group is a 2-pyridyloxycarbonyl group.
The carbamoyl group is preferably a substituted or unsubstituted carbamoyl group having 1 to 30 carbon atoms, such as a carbamoyl group, an N-methylcarbamoyl group, an N,N-dimethylcarbamoyl group, an N,N-di-n-octylcarbamoyl group, or an N-(methylsulfonyl)carbamoyl group.
The arylazo group or the heterocyclic azo group is preferably a substituted or unsubstituted arylazo group having 6 to 30 carbon atoms or a substituted or unsubstituted heterocyclic azo group having 3 to 30 carbon atoms, such as a phenylazo group, a p-chlorophenylazo group, or a 5-ethylthio-1,3,4-thiadiazol-2-ylazo group.
The imide group is preferably an N-succinimide group or an N-phthalimide group.
The phosphino group is preferably a substituted or unsubstituted phosphino group having 0 to 30 carbon atoms, such as a dimethylphosphino group, a diphenylphosphino group, or a methylphenoxyphosphino group.
The phosphinyl group is preferably a substituted or unsubstituted phosphinyl group having 0 to 30 carbon atoms, such as a phosphinyl group, a dioctyloxyphosphinyl group, or a diethoxyphosphinyl group.
The phosphinyloxy group is preferably a substituted or unsubstituted phosphinyloxy group having 0 to 30 carbon atoms, such as a diphenoxyphosphinyloxy group or a dioctyloxyphosphinyloxy group.
The phosphinylamino group is preferably a substituted or unsubstituted phosphinylamino group having 0 to 30 carbon atoms, such as a dimethoxyphosphinylamino group or a dimethylaminophosphinylamino group.
The silyl group is preferably a substituted or unsubstituted silyl group having 0 to 30 carbon atoms, such as a trimethylsilyl group, a t-butyldimethylsilyl group, or a phenyldimethylsilyl group.
Examples of the ionic hydrophilic group include a sulfo group ($-SO_3M$), a carboxy group (-COOM), a thiocarboxy group, a sulfino group ($-SO_2M$), a phosphono group (-PO(OR)(OM)), a dihydroxyphosphino group, a phosphate group ($-PO(OM)_2$), a quaternary ammonium group, an acylsulfamoyl group ($-SO_2N^-M^+COR$), a sulfonylcarbamoyl group ($-CON^-M^+SO_2-R$), and a sulfonylamino sulfonyl group ($-SO_2N^-M^+SO_2-R$), where M represents a hydrogen atom or a counter cation and R includes, for example, monovalent substituents (such as alkyl groups and aryl groups). Of these, a sulfo group ($-SO_3M$), a carboxy group (-COOM), and a phosphate group ($-PO(OM)_2$) are preferred, and a sulfo group ($-SO_3M$) and a carboxy group (-COOM) are particularly preferred.

As described above, the ionic hydrophilic group may be in a salt state. Examples of the counter cation that forms a salt include an ammonium ion, alkali metal ions (e.g., a lithium ion, a sodium ion, and a potassium ion), and organic cations (e.g., a tetramethylammonium ion, a tetramethylguanidinium ion, and a tetramethylphosphonium ion).

M is preferably a hydrogen atom, an ammonium ion, or an alkali metal ion, more preferably an alkali metal ion, still more preferably a lithium ion, a sodium ion, or a potassium ion, particularly preferably a lithium ion or a sodium ion, and most preferably a lithium ion.

In the present invention, when the compound is a salt, the salt is present in the water-soluble ink in such a manner that the salt is dissolved in a state of being completely dissociated into ions. When the compound has an ionic hydrophilic group having a high acid dissociation constant (pKa), in some cases, the compound is present in such a manner that most part is dissociated, and a part is dissolved in a salt state.

Dye Represented by General Formula (I)

The dye represented by general formula (I) will be described.

General formula (I)

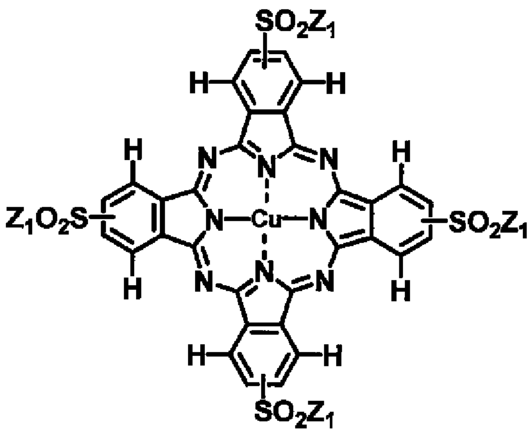

In general formula (I), each $Z_1$ represents an alkyl group, cycloalkyl group, alkenyl group, aralkyl group, aryl group, or heterocyclic group having a substituent that includes at least an ionic hydrophilic group.

The dye represented by general formula (I) above is a phthalocyanine-based dye in which substituted sulfonyl groups ($-SO_2-Z_1$) are introduced to β positions. That is, in general formula (I), $-SO_2-Z_1$ replace hydrogen atoms at β positions but do not replace hydrogen atoms at α positions. All four $-SO_2-Z_1$ in general formula (I) are the same group.

The α positions and the β positions of the phthalocyanine skeleton are illustrated in formula (a) below.

Formula (a)

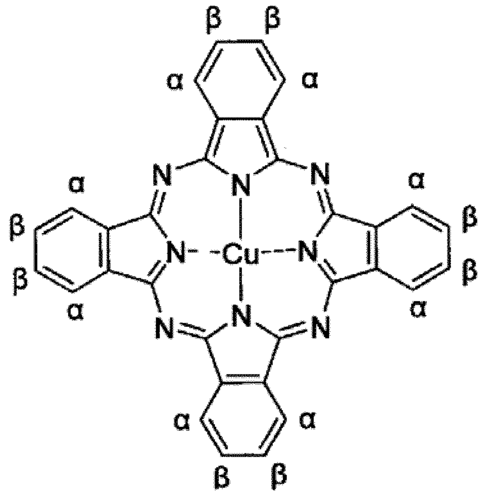

In general formula (I), each $Z_1$ represents an alkyl group, cycloalkyl group, alkenyl group, aralkyl group, aryl group, or heterocyclic group having a substituent that includes at least an ionic hydrophilic group, preferably represents an alkyl group, aryl group, or heterocyclic group having a substituent that includes at least an ionic hydrophilic group, more preferably represents an alkyl group or aryl group having a substituent that includes at least an ionic hydrophilic group, and still more preferably represents an alkyl group having a substituent that includes at least an ionic hydrophilic group.

"The alkyl group, cycloalkyl group, alkenyl group, aralkyl group, aryl group, or heterocyclic group having a substituent that includes at least an ionic hydrophilic group" may be "an alkyl group, cycloalkyl group, alkenyl group, aralkyl group, aryl group, or heterocyclic group having, as a substituent, at least an ionic hydrophilic group" or may be "an alkyl group, cycloalkyl group, alkenyl group, aralkyl group, aryl group, or heterocyclic group having, as a substituent, a group other than an ionic hydrophilic group, the group being substituted with at least an ionic hydrophilic group".

When $Z_1$ represents an alkyl group having a substituent that includes at least an ionic hydrophilic group, the alkyl group is not particularly limited, but is preferably an alkyl group having 1 to 8 carbon atoms, more preferably an alkyl group having 1 to 6 carbon atoms, and still more preferably an alkyl group having 3 to 5 carbon atoms from the viewpoints of solubility of the dye in water and stability of the substituent. The alkyl group may be linear or branched, but is preferably linear.

When $Z_1$ represents a cycloalkyl group having a substituent that includes at least an ionic hydrophilic group, the cycloalkyl group is not particularly limited, but is preferably a cycloalkyl group having 3 to 8 carbon atoms, more preferably a cycloalkyl group having 3 to 7 carbon atoms, and still more preferably a cycloalkyl group having 3 to 6 carbon atoms from the viewpoint of solubility of the dye in water.

When $Z_1$ represents an alkenyl group having a substituent that includes at least an ionic hydrophilic group, the alkenyl group is not particularly limited, but is preferably an alkenyl group having 2 to 8 carbon atoms, more preferably an alkenyl group having 2 to 6 carbon atoms, and still more preferably an alkenyl group having 3 to 5 carbon atoms from the viewpoints of solubility of the dye in water and stability of the substituent.

When $Z_1$ represents an aralkyl group having a substituent that includes at least an ionic hydrophilic group, the aralkyl group is not particularly limited, but is preferably an aralkyl group having 7 to 16 carbon atoms, more preferably an aralkyl group having 7 to 12 carbon atoms, and still more preferably an aralkyl group having 7 to 8 carbon atoms from the viewpoint of solubility of the dye in water.

When $Z_1$ represents an aryl group having a substituent that includes at least an ionic hydrophilic group, the aryl group is not particularly limited, but is preferably an aryl group having 6 to 14 carbon atoms, more preferably an aryl group having 6 to 12 carbon atoms, and still more preferably an aryl group having 6 to 10 carbon atoms from the viewpoint of solubility of the dye in water.

When $Z_1$ represents a heterocyclic group having a substituent that includes at least an ionic hydrophilic group, the heterocyclic group is not particularly limited, but is preferably a heterocyclic group having 2 to 12 carbon atoms, more preferably a heterocyclic group having 2 to 8 carbon atoms, and still more preferably a heterocyclic group having 2 to 6 carbon atoms from the viewpoints of solubility of the dye in water and stability of the substituent.

$Z_1$ has a substituent that includes at least an ionic hydrophilic group. The ionic hydrophilic group is the same as that described in the substituent group A and is preferably an acidic group, more preferably a sulfo group, a carboxy group, or a phosphate group, particularly preferably a sulfo group or a carboxy group, and most preferably a sulfo group.

When $Z_1$ is an alkyl group, cycloalkyl group, alkenyl group, aralkyl group, aryl group, or heterocyclic group having, as a substituent, a group other than an ionic hydrophilic group, the group being substituted with at least an ionic hydrophilic group, examples of the group other than the ionic hydrophilic group include substituted or unsubstituted alkyloxy groups, substituted or unsubstituted aryloxy groups, substituted or unsubstituted amino groups, substituted or unsubstituted sulfamoyl groups, substituted or unsubstituted carbamoyl groups, substituted or unsubstituted alkylsulfonyl groups, and substituted or unsubstituted arylsulfonyl groups. When these substituents can further have at least one substituent, groups having, as the additional substituent, for example, a substituent selected from the substituent group A are also included in examples of the group other than the ionic hydrophilic group. The group other than the ionic hydrophilic group preferably has 1 to 20 carbon atoms and more preferably has 1 to 10 carbon atoms.

$Z_1$ may have another substituent besides the ionic hydrophilic group. Examples of the other substituent include the substituents selected from the substituent group A. The substituent is preferably a halogen atom, a hydroxy group, a substituted or unsubstituted alkoxy group, a substituted or unsubstituted aryloxy group, a substituted or unsubstituted amino group, a substituted or unsubstituted sulfamoyl group, an alkylsulfonyl group, an arylsulfonyl group, or a substituted or unsubstituted carbamoyl group, more preferably a hydroxy group, a substituted or unsubstituted amino group, a substituted or unsubstituted sulfamoyl group, an alkylsulfonyl group, an arylsulfonyl group, or a substituted or unsubstituted carbamoyl group, still more preferably a substituted or unsubstituted sulfamoyl group or a substituted or unsubstituted carbamoyl group, and particularly preferably a substituted or unsubstituted sulfamoyl group.

Preferred examples of $-SO_2Z_1$ include $-SO_2(CH_2)_3-SO_3M$, $-SO_2(CH_2)_4-SO_3M$, $-SO_2(CH_2)_5-SO_3M$, $-SO_2(CH_2)_3-CO_2M$, $-SO_2(CH_2)_4-CO_2M$, $-SO_2(CH_2)_5-CO_2M$, $-SO_2C_2H_4OC_2H_4SO_3M$, $-SO_2CH_2CH(OH)CH_2SO_3M$,

$-SO_2CH_2CH(OH)CH_2CO_2M$, - $SO_2(CH_2)_3CH(CH_3)SO_3M$, $-SO_2(CH_2)_3-SO_2NHCH_2CH(OH)CH_2SO_3M$, $-SO_2(CH_2)_3-SO_2NHCH_2CH(OH)CH_2CO_2M$, $-SO_2(CH_2)_3-CONHC_2H_4SO_3M$, $-SO_2(CH_2)_3-CONHCH_2CH(OH)CH_2CH_2SO_3M$, $-SO_2(CH_2)_3-CONHCH_2CH(OH)CH_2CH_2CO_2M$, and

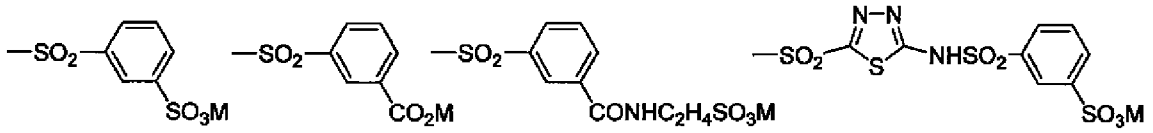

M represents a hydrogen atom or a counter cation. Examples of the counter cation include, but are not particularly limited to, alkali metal ions, an ammonium ion, and organic cations (e.g., tetramethylammonium, guanidinium, and pyridinium).

M is preferably a hydrogen atom, an ammonium ion, or an alkali metal ion, more preferably an alkali metal ion, still more preferably a lithium ion, a sodium ion, or a potassium ion, particularly preferably a lithium ion or a sodium ion, and most preferably a lithium ion.

In particular, a lithium salt of a sulfo group ($-SO_3Li$) is preferred because the solubility of the dye is enhanced, and ink stability is improved. M may be a divalent counter cation. When M is a divalent counter cation, the dye may have, for example, a form in which one M functions as a counter cation of two $-SO_3^-$. From the viewpoint of water solubility, M is preferably a monovalent counter cation.

When M represents a particular cation (e.g., a lithium ion), all M are not necessarily lithium ions, but substantially, the counter cation having the highest presence ratio is preferably a lithium ion. Under the conditions of such a presence ratio, the dye can include, as M, for example, a hydrogen atom, an alkali metal ion (e.g., a sodium ion or a potassium ion), an alkaline-earth metal ion (e.g., a magnesium ion, a calcium ion, or the like), a quaternary ammonium ion, a quaternary phosphonium ion, or a sulfonium ion. The amount of lithium ions is preferably 50% or more, more preferably 60% or more, still more preferably 80% or more, and particularly preferably 90% or more relative to the total of M. The upper limit of the amount of lithium ions is preferably 100%.

This also applies to a case where the particular cation represents a cation (e.g., a sodium ion) other than a lithium ion.

The dye (phthalocyanine dye) represented by general formula (I) can be synthesized by a publicly known method (for example, methods described in Examples of JP3949385B, JP4145153B, and JP4512543B).

Specific examples of the dye represented by general formula (I) are described below, but are not limited thereto. In structural formulae of specific compounds below, each specific compound is a mixture of positional isomers (refer to (2A) to (2D) below) that vary depending on introduction positions (β positions) of particular substituents (each R represents $-SO_2Z_1$). Therefore, the introduction positions of substituents are not specified, and the positional isomers are treated as the same compound. In the specific examples below, a substituted sulfonyl group ($-SO_2Z_1$) replaces any hydrogen atom at β position but does not replace the positions with "H" in each structural formula.

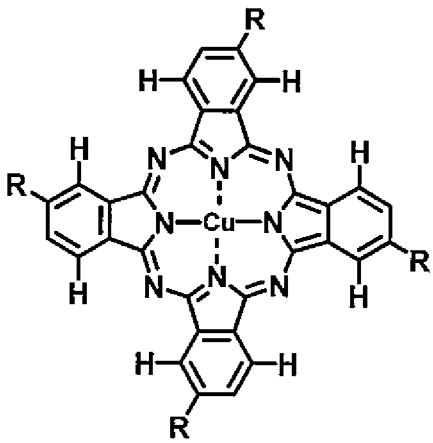

(2A)

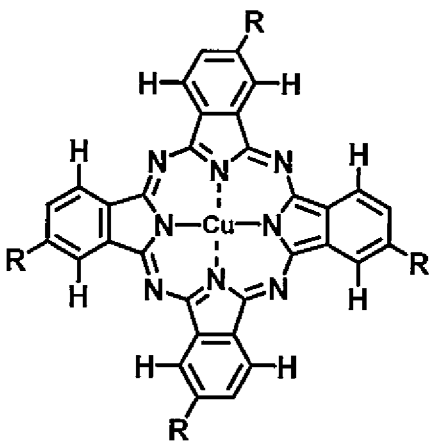

(2B)

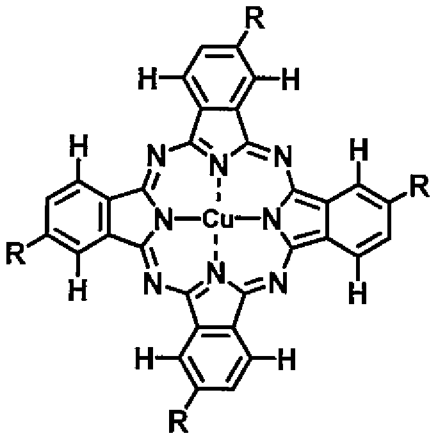

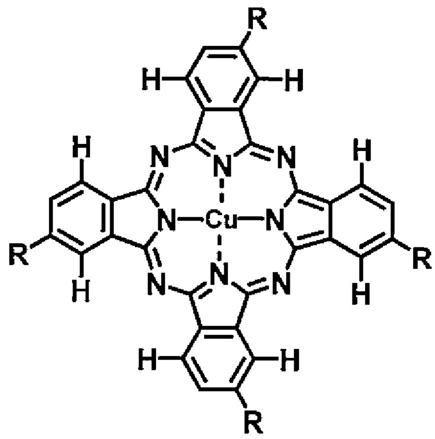

(2C) (2D)

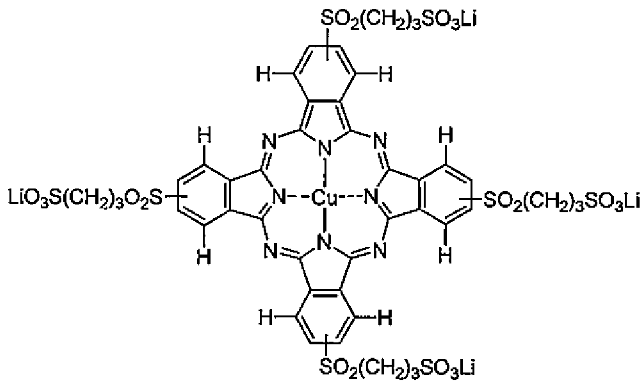

(C-1)

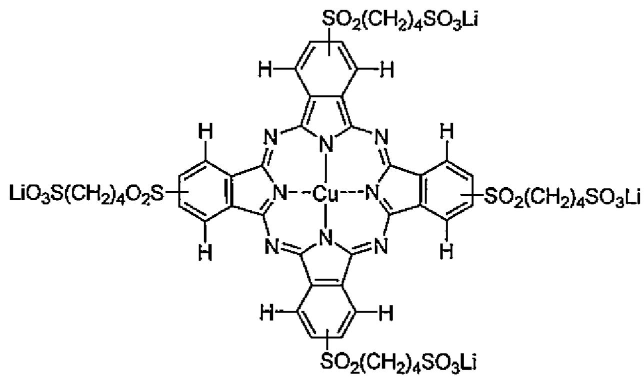

(C-2)

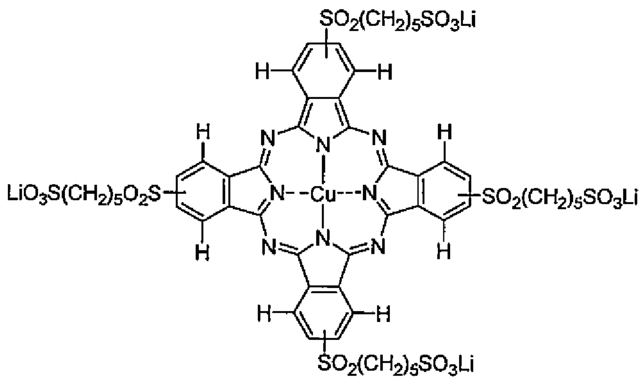

(C-3)

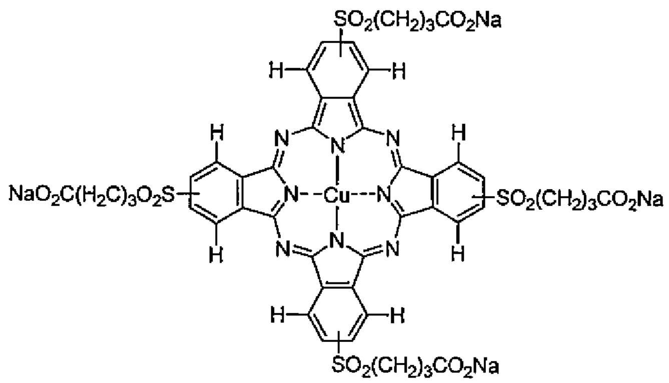

(C-4)

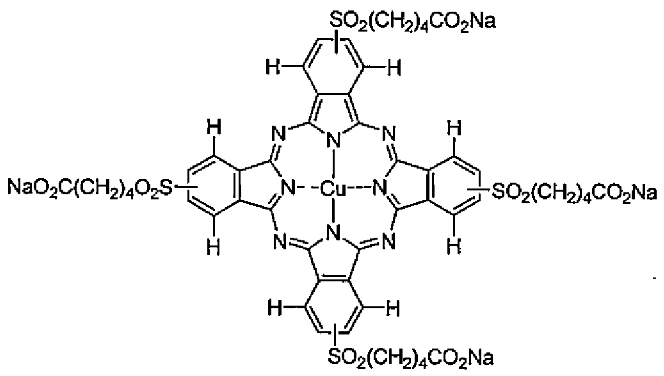

(C-5)

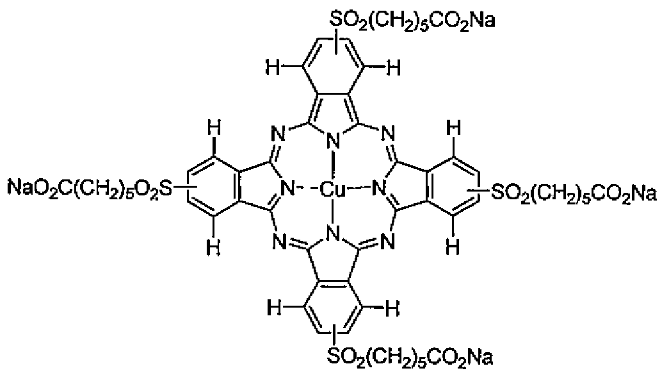

(C-6)

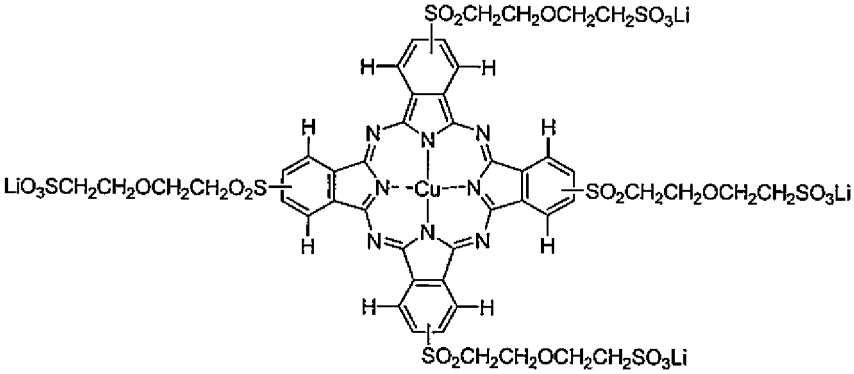

(C-7)

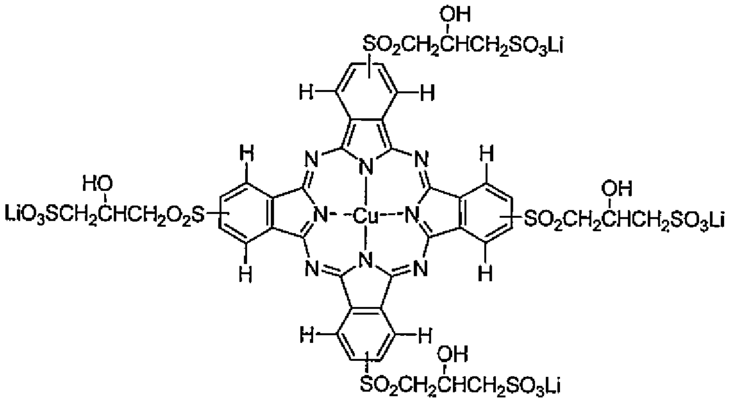

(C-8)

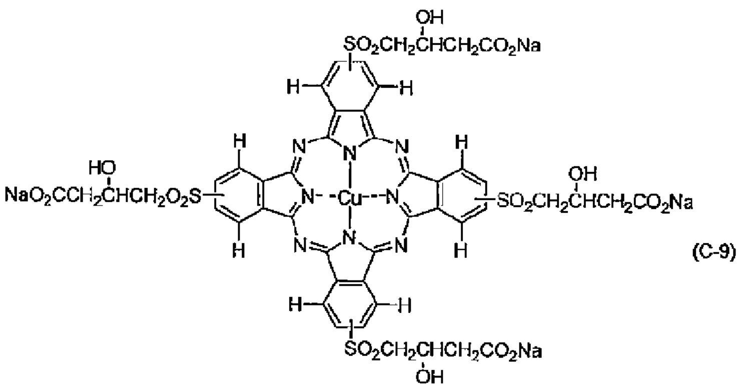

(C-9)

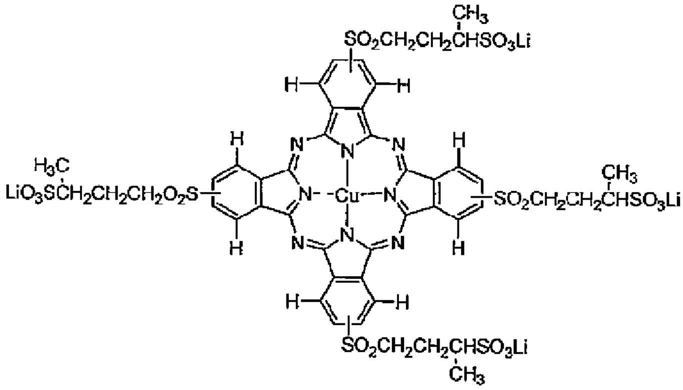

(C-10)

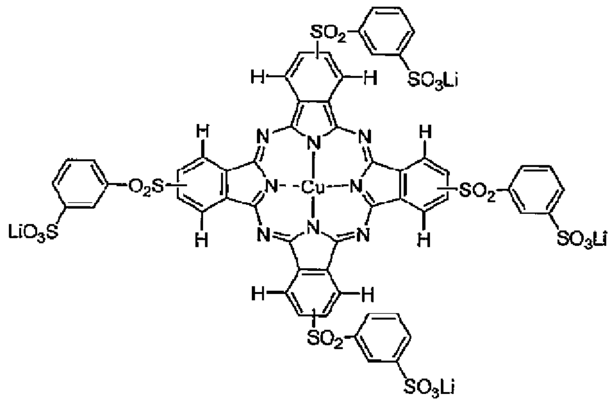

(C-11)

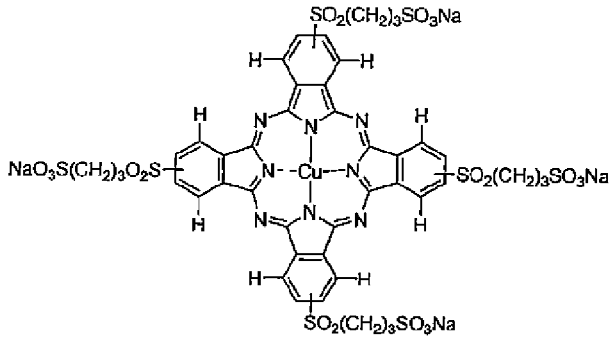

(C-12)

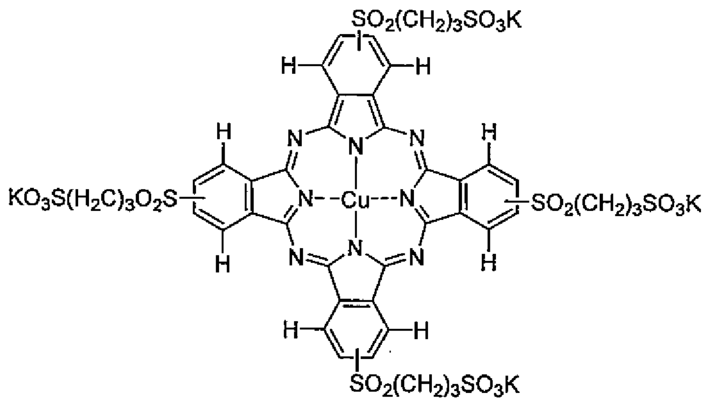

(C-13)

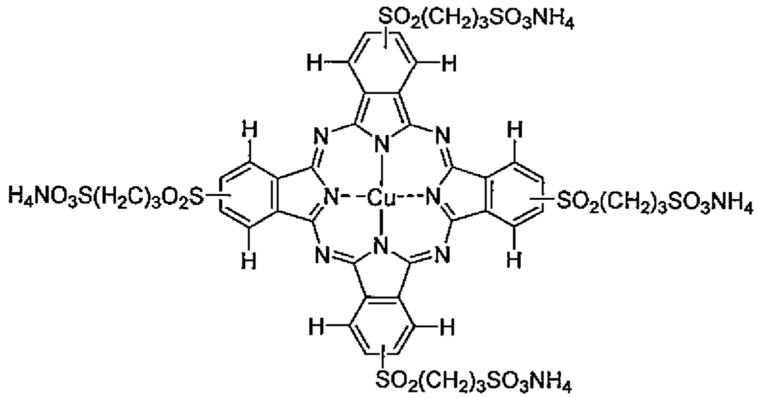

(C-14)

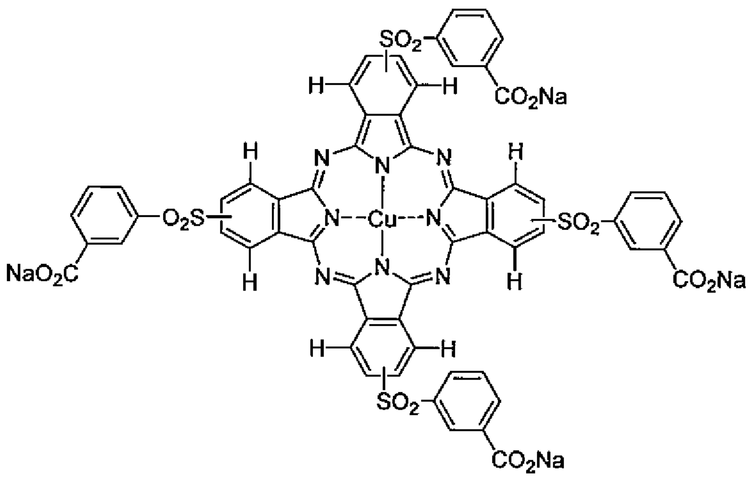

(C-15)

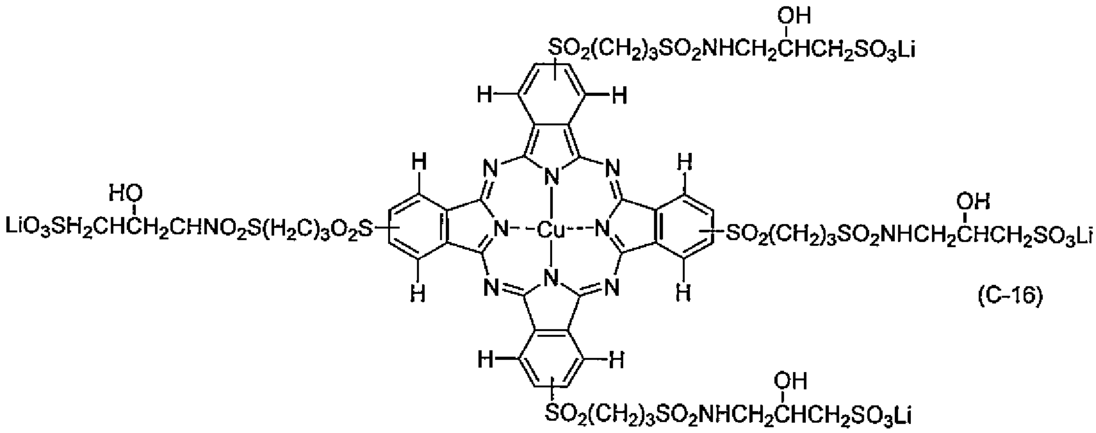

(C-16)

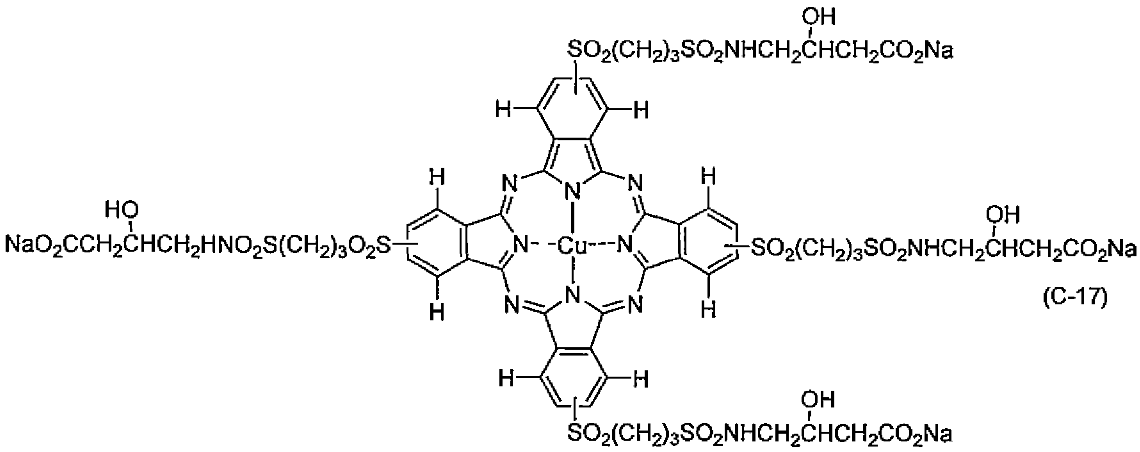

(C-17)

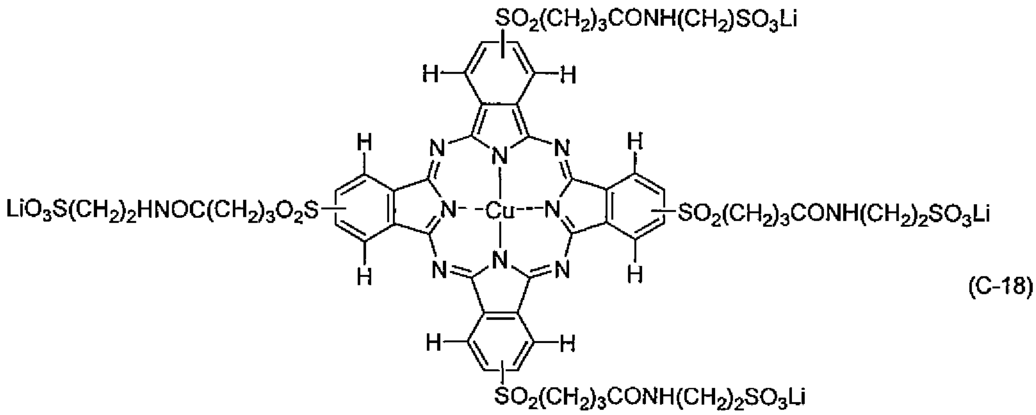

(C-18)

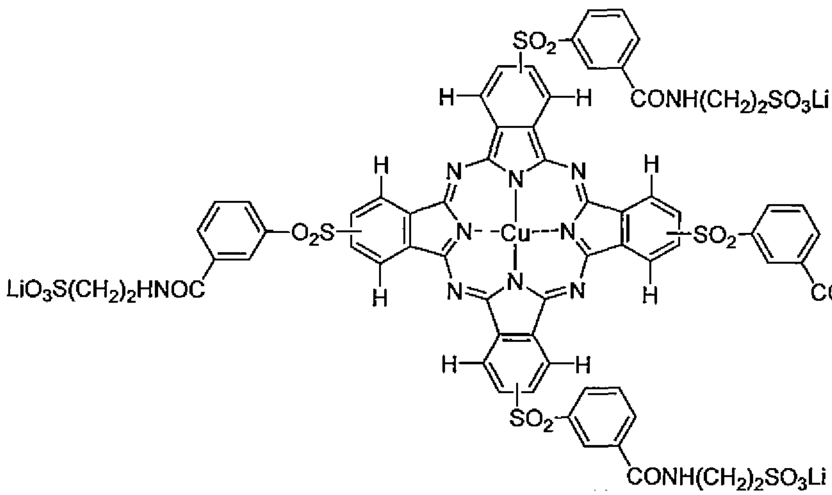

(C-19)

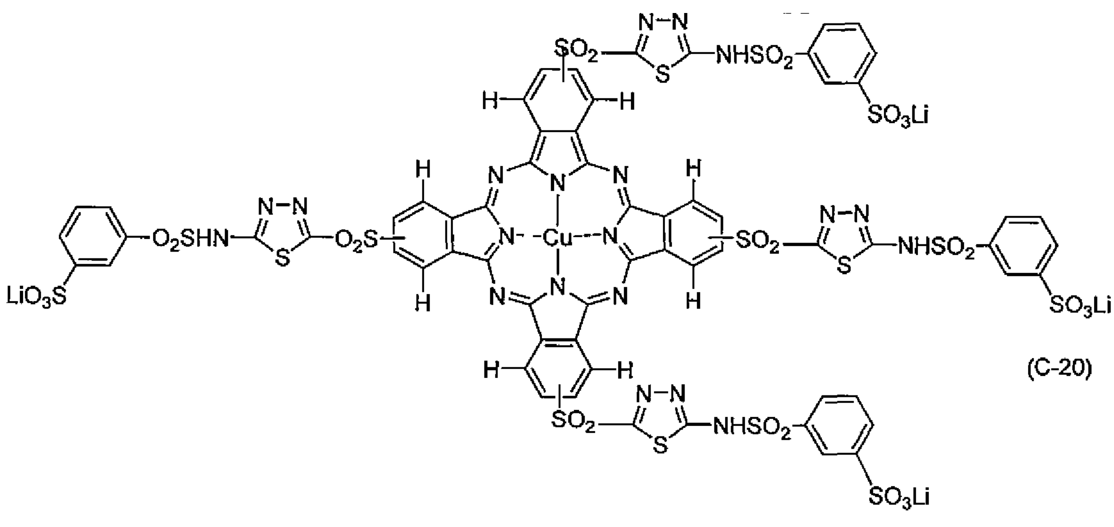

(C-20)

From the viewpoints of the printing density on various types of image-receiving paper (ink jet paper and plain paper) and the fastness of dye color images, the content of the compound represented by general formula (I) in the dye ink composition according to the present invention is preferably 1.0% to 8.0% by mass, more preferably 2.0% to 6.0% by mass, still more preferably 2.5% to 6.0% by mass, and particularly preferably 3.0% to 5.0% by mass with respect to the total mass of the dye ink composition.

The dye ink composition according to the present invention may contain, in addition to the dye represented by general formula (I), a compound (toning agent) represented by the following general formula (Cy-1).

(Cy-1)

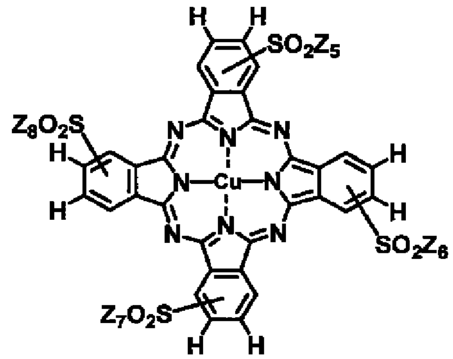

In the general formula (Cy-1), $Z_5$, $Z_6$, $Z_7$, and $Z_8$ each independently represent a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group, provided that at least one of $Z_5$, $Z_6$, $Z_7$, or $Z_8$ has a substituent that includes an ionic hydrophilic group.

The alkyl group, cycloalkyl group, alkenyl group, aralkyl group, aryl group, and heterocyclic group represented by $Z_5$, $Z_6$, $Z_7$, and $Z_8$ in general formula (Cy-1) are the same as the alkyl group, cycloalkyl group, alkenyl group, aralkyl group, aryl group, and heterocyclic group, respectively, described as $Z_1$ in general formula (I) above, and the preferred examples are also the same.

The compound represented by general formula (Cy-1) is a phthalocyanine-based dye in which substituted sulfonyl groups ($-SO_2-Z_5$, $-SO_2-Z_6$, $-SO_2-Z_7$, and $-SO_2-Z_8$) are introduced to $\alpha$ positions. That is, in general formula (Cy-1), $-SO_2-Z_5$, $-SO_2-Z_6$, $-SO_2-Z_7$, and $-SO_2-Z_8$ replace hydrogen atoms at $\alpha$ positions but do not replace hydrogen atoms at $\beta$ positions.

The $\alpha$ positions and the $\beta$ positions of the phthalocyanine skeleton are illustrated in formula (a) above.

The compound represented by general formula (Cy-1) can be synthesized by a publicly known method (for example, methods described in JP3949385B and JP4854250B).

Specific examples of the compound represented by general formula (Cy-1) are described below, but are not limited thereto. In structural formulae of specific compounds below, each specific compound is a mixture of positional isomers (refer to (3A) to (3D) below) that vary depending on introduction positions ($\alpha$ positions) of particular substituted sulfonyl groups (Q represents $-SO_2-Z_5$, $-SO_2-Z_6$, $-SO_2-Z_7$, or $-SO_2-Z_8$). Therefore, the introduction positions of substituents are not specified, and the positional isomers are treated as the same compound. In the specific examples below, a substituted sulfonyl group replaces any hydrogen atom at $\alpha$ position but does not replace the positions with "H" in each structural formula.

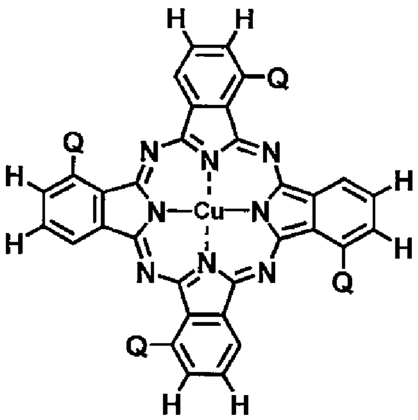

(3A)

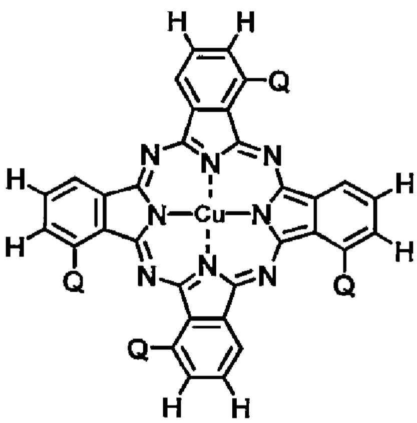

(3B)

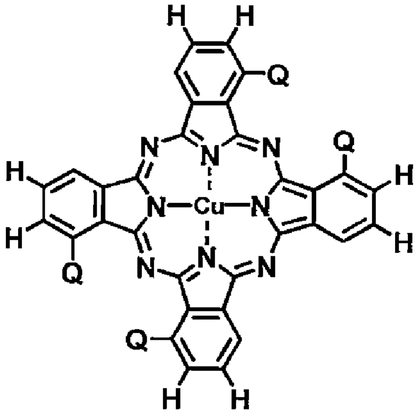

(3C)

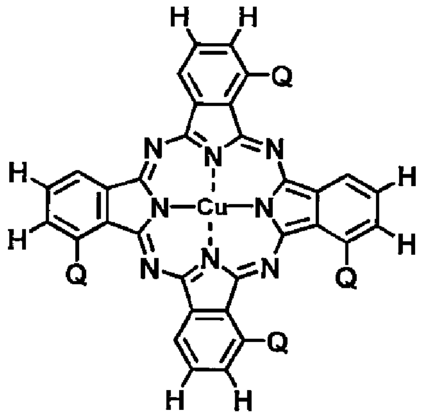

(3D)

(C-21)

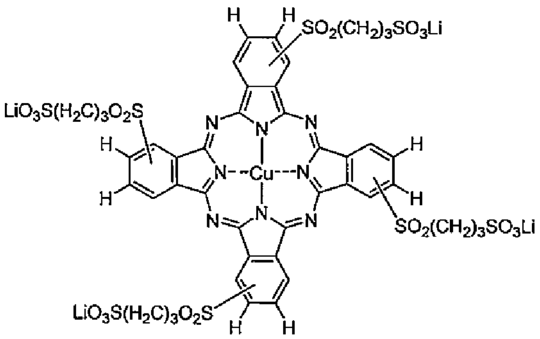

(C-22)

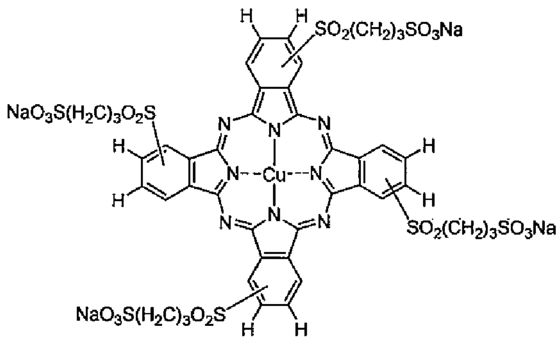

(C-23)

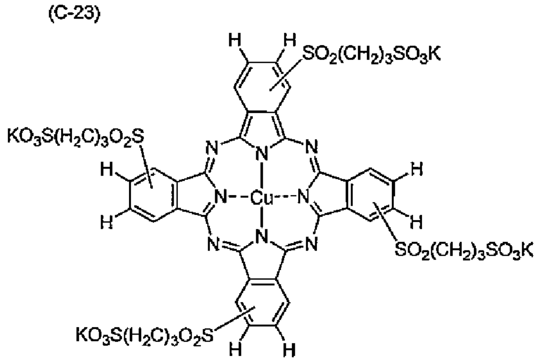

(C-24)

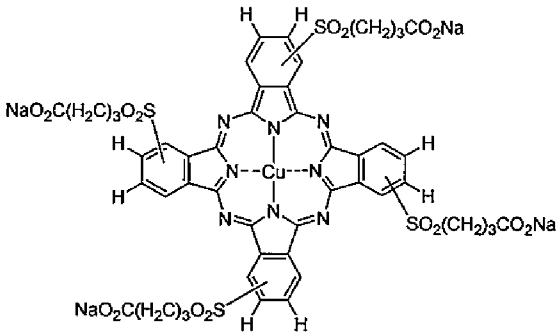

(C-25)

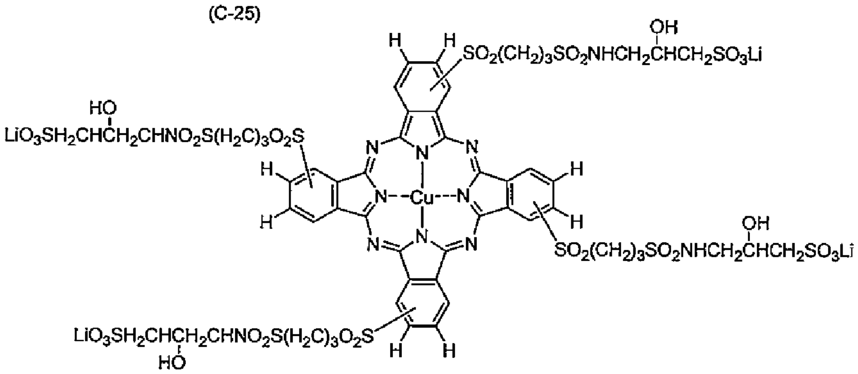

The use of the β-position substituted compound represented by general formula (I) and the α-position substituted

compound represented by general formula (Cy-1) enables the adjustment of a ratio of α-position substitution and β-position substitution between molecules rather than in a molecule. Consequently, both high printing density (on plain paper and on ink jet paper) and good image durability can be achieved at a high level.

The dye ink composition according to the present invention can contain the compound represented by general formula (I) above and compounds (toning agents) represented by the following general formulae (Cy-2) to (Cy-5).

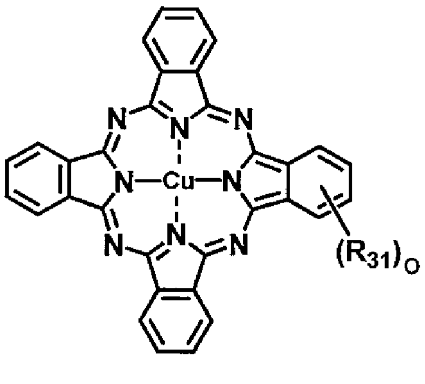

(Cy-2)

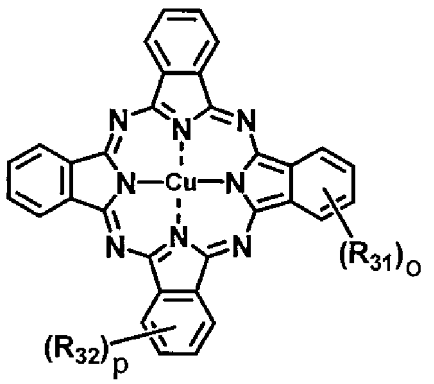

(Cy-3)

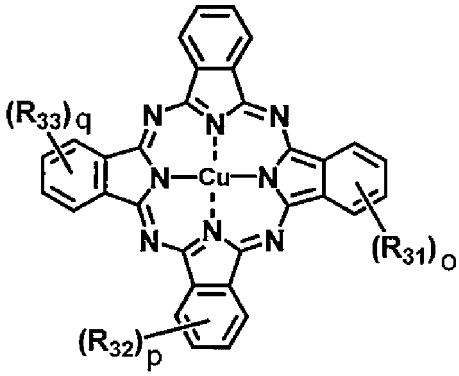

(Cy-4)

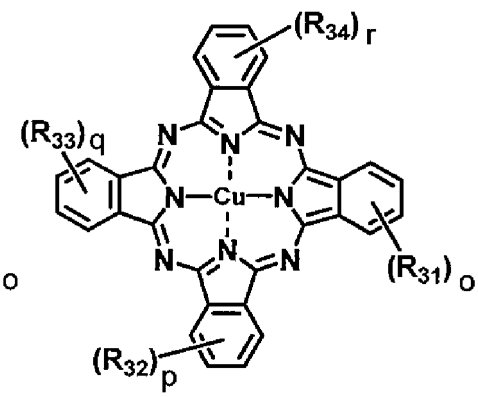

(Cy-5)

In general formulae (Cy-2) to (Cy-5), $R_{31}$, $R_{32}$, $R_{33}$, and $R_{34}$ each independently represent a substituted or unsubstituted sulfamoyl group, a substituted or unsubstituted carbamoyl group, a sulfo group, or a carboxy group; in a case where a plurality of $R_{31}$'s, $R_{32}$'s, $R_{33}$'s, or $R_{34}$'s are present, the plurality of $R_{31}$'s, $R_{32}$'s, $R_{33}$'s, or $R_{34}$'s may be the same as or different from each other; and o, p, q, and r each independently represent an integer of 1 to 4.

The toning agent represented by any of general formulae (Cy-2) to (Cy-5) is an α-position/β-position substitution mixture (for example, α-position/β-position ≈ 10%/90% to 50%/50%) in which there is no selectivity of the introduction positions of substituents with regard to the α positions and the β positions of the phthalocyanine dye skeleton illustrated in formula (a) above.

In general formulae (Cy-2) to (Cy-5), preferred $R_{31}$, $R_{32}$, $R_{33}$, and $R_{34}$ are each independently a substituted or unsubstituted sulfamoyl group, a carbamoyl group, a sulfo group ($-SO_3M$), or a carboxy group (-COOM) from the viewpoints of availability of raw materials and the ease of synthesis. Of these, a substituted sulfamoyl group ($-SO_2NR_4R_{42}$: where $R_{41}$ and $R_{42}$ each independently represent a hydrogen atom or a substituent), an unsubstituted sulfamoyl group ($-SO_2NH_2$), and a sulfo group ($-SO_3M$) are preferred in view of the attained level of required performance of ink jet printing. Of these, a mixture of a substituted sulfamoyl group ($-SO_2NHR_{42}$: where $R_{42}$ represents a substituent that contains an ionic hydrophilic group), an unsubstituted sulfamoyl group ($-SO_2NH_2$), and a sulfo group ($-SO_3M$) is preferred from the viewpoints of water solubility and image durability.

The counter cation (M) of the ionic hydrophilic group contained in the toning agent represented by any of general formulae (Cy-2) to (Cy-5) above represents a hydrogen atom or a counter cation. Examples of the counter cation include, but are not particularly limited to, alkali metal ions, an ammonium ion, and organic cations (e.g., tetramethylammonium, guanidinium, and pyridinium). M is preferably a hydrogen atom, an ammonium ion, or an alkali metal ion, more preferably

an alkali metal ion, still more preferably a lithium ion, a sodium ion, or a potassium ion, particularly preferably a lithium ion or a sodium ion, and most preferably a lithium ion. In particular, a lithium salt of a sulfo group ($-SO_3Li$) is preferred because the solubility of the dye is enhanced, and ink stability is improved.

When M represents a lithium ion, all M are not necessarily lithium ions, but substantially, the counter cation having the highest presence ratio is preferably a lithium ion. Under the conditions of such a presence ratio, the toning agent can include, as M, for example, a hydrogen atom, an alkali metal ion (e.g., a sodium ion or a potassium ion), an alkaline-earth metal ion (e.g., a magnesium ion, a calcium ion, or the like), a quaternary ammonium ion, a quaternary phosphonium ion, or a sulfonium ion.

The amount of lithium ions is preferably 50% or more, more preferably 60% or more, still more preferably 80% or more, and particularly preferably 90% or more relative to the total of M. The upper limit of the amount of lithium ions is preferably 100%.

In the general formulae, o, p, q, and r each independently represent an integer of 1 to 4, preferably 1 to 3, particularly preferably 1 to 2, and most preferably 1. A mixture of general formulae (Cy-2), (Cy-3), (Cy-4), and (Cy-5) is preferred from the viewpoint of availability of a dye serving as a coloring agent. Examples of the specific compound include C.I. Direct Blue 86, 87, and 199.

Phthalocyanine derivatives that are represented by any of general formulae (Cy-2) to (Cy-5) and that can be used in the present invention can be synthesized, for example, by employing methods described or cited in, for example, "Phthalocyanine -Chemistry and Function-" written by Shirai and Kobayashi, published by IPC, pp. 1 to 62 and "Phthalocyanines - Properties and Applications" written by C. C. Leznoff and A. B. P. Lever, published by VCH, pp. 1 to 54, or by combining methods similar to the foregoing methods.

The dye ink composition according to the present invention can contain, as a dye used in combination, a coloring agent that is other than the dye represented by general formula (I) and other than the compounds listed as examples of the specific compounds. Typical dyes are listed below as examples. Note that "C.I." is an abbreviation of "color index".

- C.I. Direct Blue: 6, 22, 25, 71, 78, 90, 106, 189, 262, 264, 276, 282, 314, etc.
- C.I. Acid Blue: 9, 22, 40, 59, 93, 102, 104, 113, 117, 120, 167, 185, 197, 224, 228, 229, 234, 242, 243, 249, 254, 275, 279, 283, 310, 357, etc.

In the dye ink composition, a ratio ($W_1/W_2$) of a content $W_1$ of the dye represented by general formula (I) based on the mass to a total content $W_2$ of the compounds represented by general formulae (Cy-1) to (Cy-5) based on the mass is preferably 50/50 to 100/0, more preferably 70/30 to 100/0, still more preferably 80/20 to 100/0, particularly preferably 90/10 to 100/0, and most preferably 100/0 from the viewpoint of achieving both the printing density on plain paper and image fastness on ink jet paper.

When $W_1/W_2$ is within the above range, it is possible to obtain the effect of satisfying the following required performances at a high level: The ink has high long-term temporal stability (e.g., change in viscosity, change in surface tension, or reduction in precipitate), and a print sample obtained by using the ink has high printing density (color developability on ink jet paper and plain paper), reduced bronze luster, and high image durability (in particular, ozone resistance and light resistance on the ink jet dye).

The dye ink composition according to the present invention may further include, as a coloring agent other than the dye represented by general formula (I), other dyes such as a phthalocyanine-based dye, a partial azaphthalocyanine-based dye, and a triarylmethane-based dye in addition to the compound represented by any of general formulae (Cy-1) to (Cy-5).

In the dye ink composition, when a content of the dye represented by general formula (I) based on the mass is represented by $W_1$, a total content of the compounds represented by general formulae (Cy-1) to (Cy-5) based on the mass is represented by $W_2$, and a total content of a phthalocyanine-based dye, a partial azaphthalocyanine-based dye, and a triarylmethane-based dye based on the mass is represented by $W_3$, $\{W_1/(W_2 + W_3)\}$ is preferably 50/50 to 100/0, more preferably 70/30 to 100/0, still more preferably 80/20 to 100/0, particularly preferably 90/10 to 100/0, and most preferably 100/0. When $\{W_1/(W_2 + W_3)\}$ is within the above range, it is possible to obtain the effect of satisfying the following required performances at a high level: The ink has high long-term temporal stability (e.g., change in viscosity, change in surface tension, or reduction in precipitate), and a print sample obtained by using the ink has high printing density (color developability on ink jet paper and plain paper), reduced bronze luster, and high image durability (in particular, ozone resistance and light resistance on the ink jet dye).

In the partial azaphthalocyanine-based dye used in combination as a coloring agent that is other than the compound represented by general formula (I), at least one of outermost aromatic rings of the phthalocyanine skeleton is particularly preferably a nitrogen-containing aromatic ring (such as a pyridine ring or a pyrazine ring). The coloring agent having such a structure is preferable because ozone resistance and light resistance of an image can be improved in a balanced manner.

Compound Represented by General Formula (II)

The compound (additive) represented by general formula (II) and included in the dye ink composition according to the present invention will be described.

General formula (II)

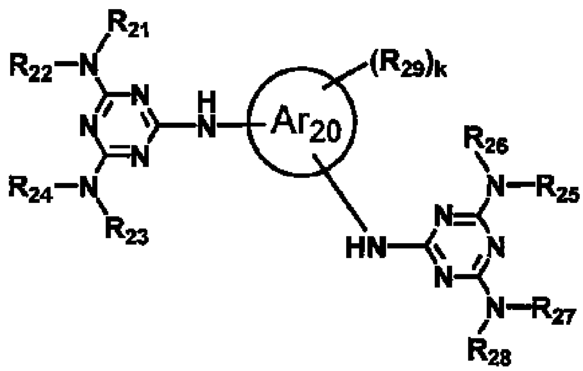

In general formula (II), $Ar_{20}$ represents a benzene ring or a naphthalene ring. $R_{21}$ to $R_{28}$ each independently represent a hydrogen atom or a substituent. $R_{21}$ and $R_{22}$ may be linked to each other to form a ring. $R_{23}$ and $R_{24}$ may be linked to each other to form a ring. $R_{25}$ and $R_{26}$ may be linked to each other to form a ring. $R_{27}$ and $R_{28}$ may be linked to each other to form a ring. $R_{29}$ represents a substituent. In a case where $Ar_{20}$ represents a benzene ring, k represents an integer of 0 to 4. In a case where $Ar_{20}$ represents a naphthalene ring, k represents an integer of 0 to 6. In a case where a plurality of $R_{29}$'s are present, the plurality of $R_{29}$'s may be the same as or different from each other. In a case where a plurality of $R_{29}$'s are present, the plurality of $R_{29}$'s may be linked to form a ring. The compound represented by general formula (II) has at least one hydrophilic group.

The compound represented by general formula (II) is preferably a colorless, water-soluble planar compound having more than 10 delocalized $\pi$ electrons in one molecule.

When the number of $\pi$ electrons constituting the delocalized $\pi$-electron system increases, and the $\pi$-electron system extends, compounds often have an absorption in the visible range. In the present invention, "colorless" includes a state of being very slightly colored within a range that does not affect an image. The water-soluble compound represented by general formula (II) may be a fluorescent compound, but is preferably a non-fluorescent compound. The water-soluble compound represented by general formula (II) is more preferably a compound having an absorption peak wavelength ($\lambda$max) of 350 nm or less, still more preferably 320 nm or less on the longest wavelength side and having a molar absorption coefficient of 10,000 or less.

The upper limit of the number of delocalized $\pi$ electrons in one molecule of the compound represented by general formula (II) is not particularly limited, but is preferably 80 or less, more preferably 50 or less, and particularly preferably 30 or less. More than 10 $\pi$ electrons may form a single large delocalization system or may form two or more delocalization systems. In particular, a compound having two or more aromatic rings in one molecule is preferred. The aromatic rings may be aromatic hydrocarbon rings or aromatic heterocyclic rings including heteroatoms. Alternatively, the aromatic rings may be fused together to form a single aromatic ring. Examples of the aromatic rings include a benzene ring, a naphthalene ring, an anthracene ring, a pyridine ring, a pyrimidine ring, a pyrazine ring, and a triazine ring.

The compound represented by general formula (II) is preferably water-soluble and is preferably a compound that dissolves in an amount of at least 1 g or more in 100 g of water at 20°C. The compound is more preferably a compound that dissolves in an amount of 5 g or more, and most preferably a compound that dissolves in an amount of 10 g or more.

The compound represented by general formula (II) has at least one hydrophilic group in one molecule. In the case of a compound having three or more aromatic rings in one molecule, the compound particularly preferably has at least two hydrophilic groups bound to the aromatic rings in the molecule.

Examples of the hydrophilic group include, but are not limited to, a sulfo group ($-SO_3M$), a carboxyl group ($-CO_2M$), a hydroxy group, a phosphate group ($-PO(OM)_2$), an alkylcarbonylamino group, an arylcarbonylamino group, an alkylsulfonylamino group, an arylsulfonylamino group, and a quaternary ammonium group. The hydrophilic group is preferably an ionic hydrophilic group, more preferably a sulfo group ($-SO_3M$) or a carboxyl group ($-COOM$), and most preferably a sulfo group ($-SO_3M$).

The compound represented by general formula (II) preferably has at least one ionic hydrophilic group.

M represents a hydrogen atom or a counter cation. Examples of the counter cation include, but are not particularly

limited to, alkali metal ions, an ammonium ion, and organic cations (e.g., tetramethylammonium, guanidinium, and pyridinium).

M is preferably a hydrogen atom, an ammonium ion, or an alkali metal ion, more preferably an alkali metal ion, still more preferably a lithium ion, a sodium ion, or a potassium ion, and particularly preferably a lithium ion or a sodium ion. The counter cation may be a single salt or a mixed salt.

The compound represented by general formula (II) preferably has 1 to 10 hydrophilic groups and more preferably has 2 to 8 hydrophilic groups in one molecule.

The compound represented by general formula (II) preferably has 2 to 6 ionic hydrophilic groups and more preferably has 2 to 4 ionic hydrophilic groups in one molecule.

At least any one of $R_{21}$ to $R_{29}$ in general formula (II) preferably has an ionic hydrophilic group and more preferably has $-SO_3M$. Still more preferably, 2 to 6 of $R_{21}$ to $R_{29}$ have $-SO_3M$, and particularly preferably, 2 to 4 of $R_{21}$ to $R_{29}$ have $-SO_3M$.

In general formula (II), $R_{21}$ to $R_{28}$ each independently represent a hydrogen atom or a substituent, and the substituent may be a substituent selected from the substituent group A. Examples of the substituent include an alkyl group, an aryl group, an aralkyl group, a heterocyclic group, an alkoxy group, an aryloxy group, a hydroxyl group, an amino group (including an anilino group and a heterocyclic amino group), an acyl group, an acylamino group, a ureido group, a halogen atom, a sulfamoyl group, a carbamoyl group, a sulfonamide group, a sulfonyl group, a sulfenyl group, a sulfinyl group, and a hydrophilic group. These may further have a substituent.

$R_{21}$ to $R_{28}$ preferably each independently represent a hydrogen atom or an alkyl group. The alkyl group is preferably an alkyl group having 1 to 12 carbon atoms, more preferably an alkyl group having 1 to 8 carbon atoms, and most preferably an alkyl group having 1 to 6 carbon atoms. The alkyl group preferably has, as a substituent, the above-described hydrophilic group from the viewpoint of preservation stability of the water-based ink.

$R_{21}$ and $R_{22}$, $R_{23}$ and $R_{24}$, $R_{25}$ and $R_{26}$, and $R_{27}$ and $R_{28}$ may each be linked to each other to form a ring. The ring is not particularly limited, and may be an aromatic ring or a non-aromatic ring. The ring is preferably a five-membered ring or a six-membered ring. The ring may include a heteroatom (such as an oxygen atom, a nitrogen atom, or a sulfur atom) besides the nitrogen atoms to which $R_{21}$ to $R_{28}$ are bound.

$R_{29}$ represents a substituent, and the substituent may be a substituent selected from the substituent group A. Examples of the substituent include an alkyl group, an aryl group, an aralkyl group, a heterocyclic group, an alkoxy group, an aryloxy group, a hydroxyl group, an amino group (including an anilino group and a heterocyclic amino group), an acyl group, an acylamino group, a ureido group, a halogen atom, a sulfamoyl group, a carbamoyl group, a sulfonamide group, a sulfonyl group, a sulfenyl group, a sulfinyl group, and a hydrophilic group. These may further have a substituent.

In a case where a plurality of $R_{29}$'s are present, the plurality of $R_{29}$'s may be the same as or different from each other. In a case where a plurality of $R_{29}$'s are present, the plurality of $R_{29}$'s may be linked to form a ring. The ring is not particularly limited, and may be an aromatic ring or a non-aromatic ring. The ring is preferably a five-membered ring or a six-membered ring. The ring may include a heteroatom (such as an oxygen atom, a nitrogen atom, or a sulfur atom).

In general formula (II), $Ar_{20}$ represents a benzene ring or a naphthalene ring, and preferably represents a benzene ring.

In a case where $Ar_{20}$ represents the benzene ring, k represents an integer of 0 to 4 and is preferably an integer of 0 to 2, and more preferably 0 or 1.

In a case where $Ar_{20}$ represents the naphthalene ring, k represents an integer of 0 to 6 and is preferably an integer of 0 to 4, more preferably an integer of 0 to 2, and still more preferably 0 or 1.

Specific examples of the compound represented by general formula (II) are described below, but are not limited thereto.

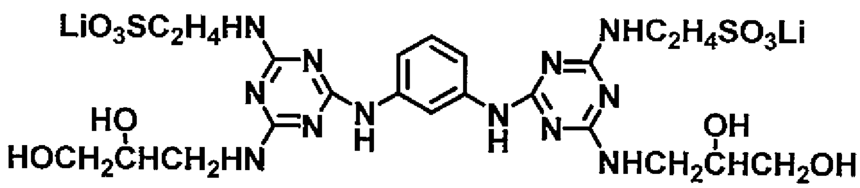

(P-1)

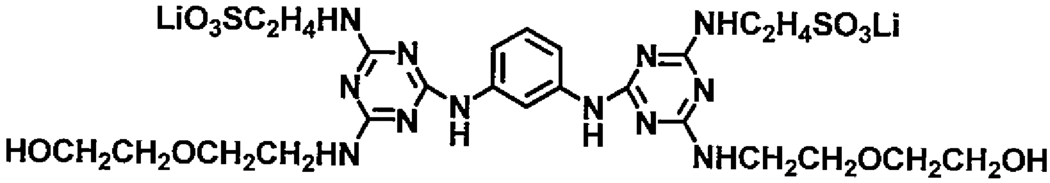

(P-2)

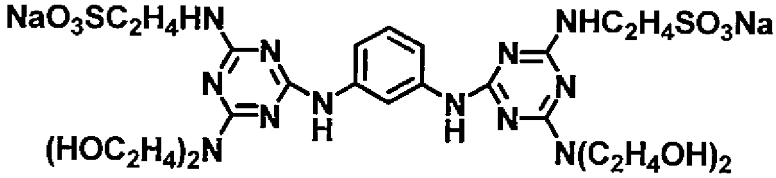

(P-3)

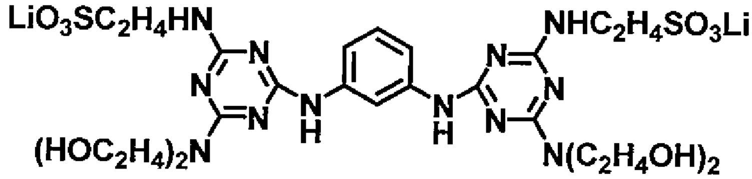

(P-4)

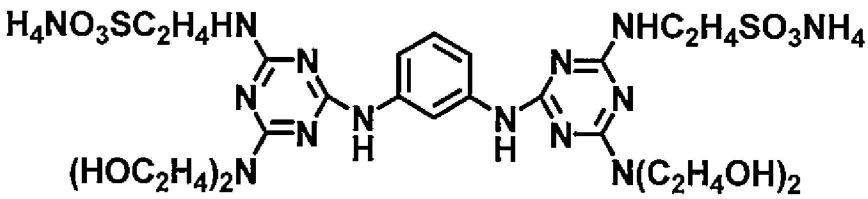

(P-5)

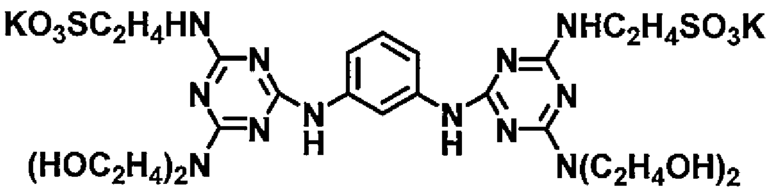

(P-6)

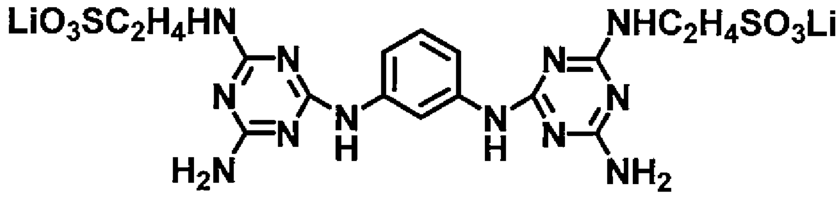

(P-7)

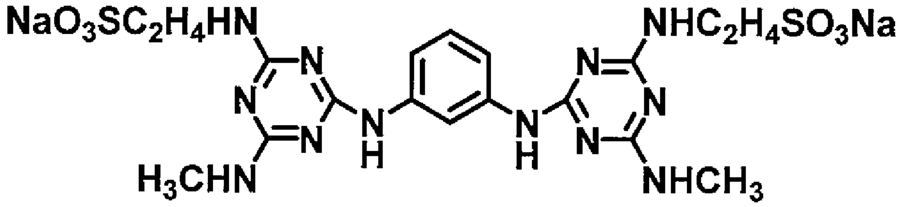

(P-8)

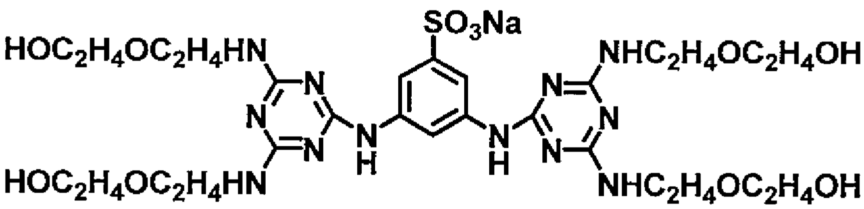

(P-9)

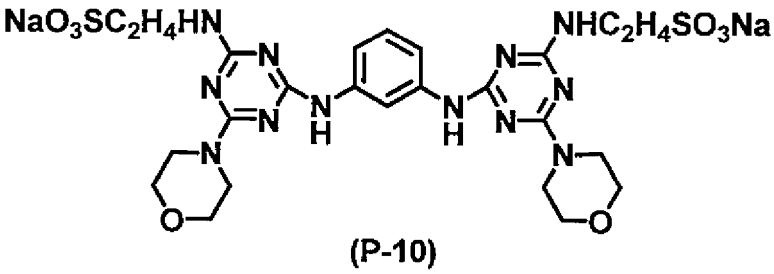

(P-10)

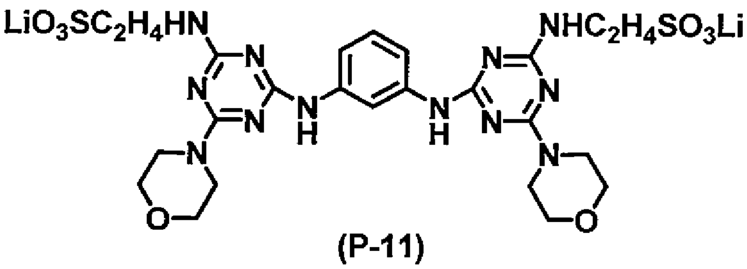

(P-11)

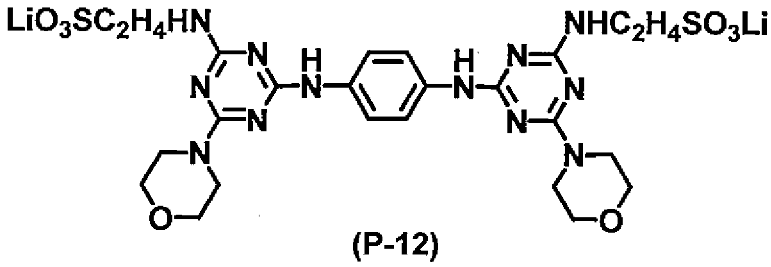

(P-12)

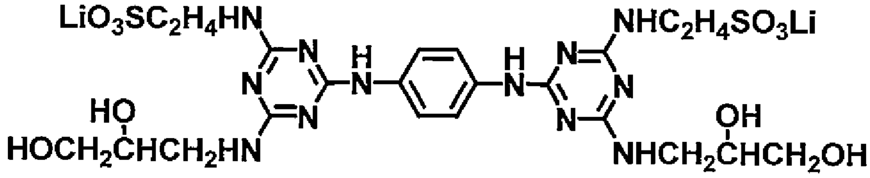

(P-13)

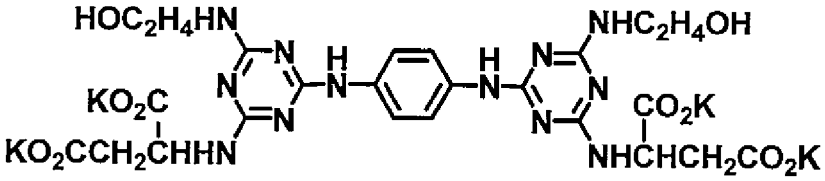

(P-14)

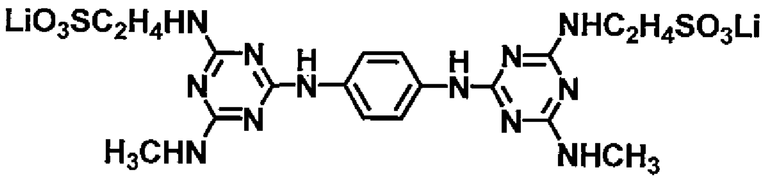

(P-15)

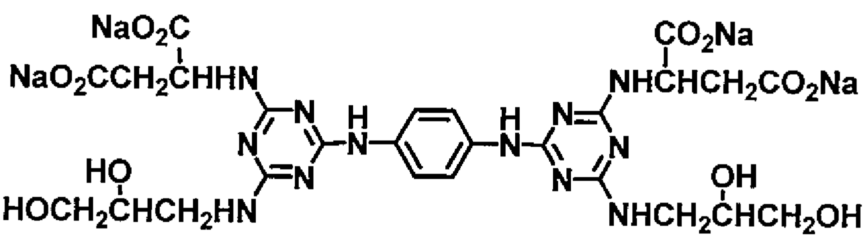

(P-16)

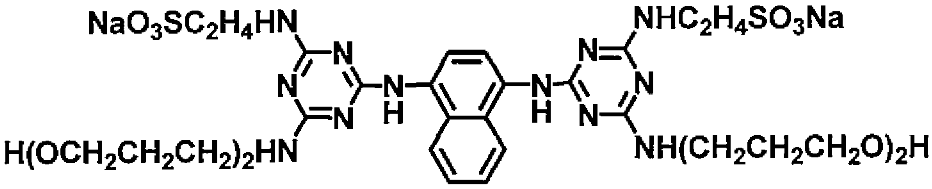

(P-17)

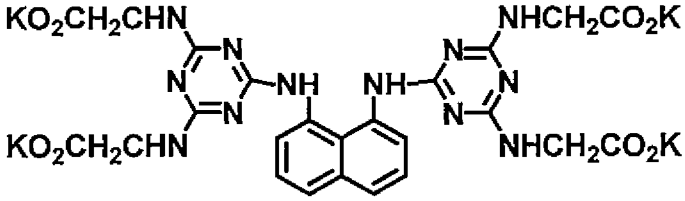

(P-18)

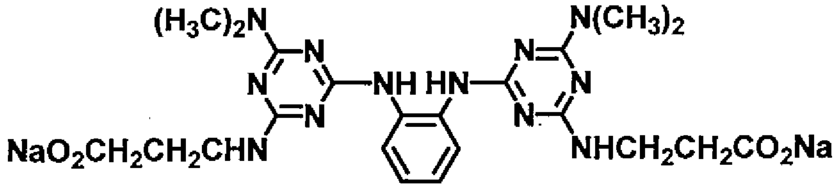

(P-19)

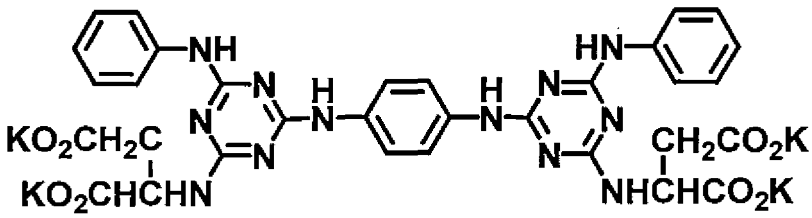

(P-20)

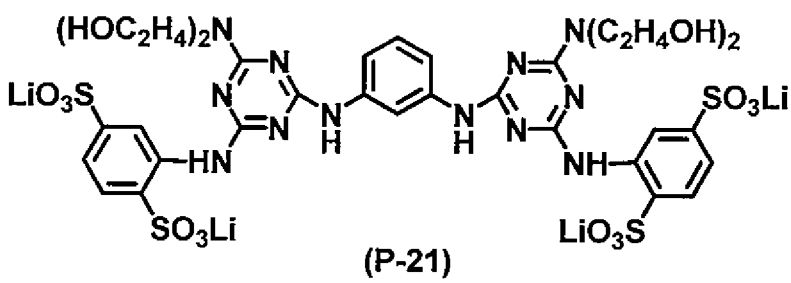

(P-21)

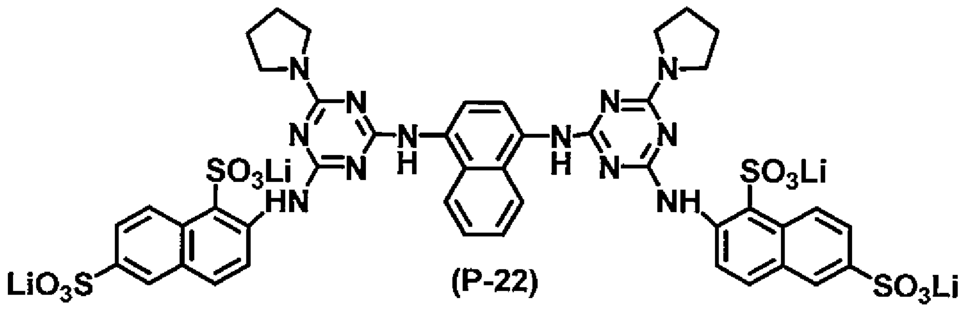

(P-22)

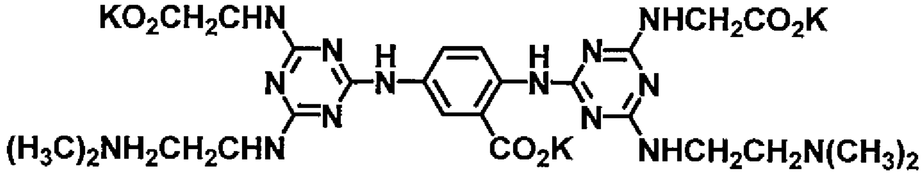

(P-23)

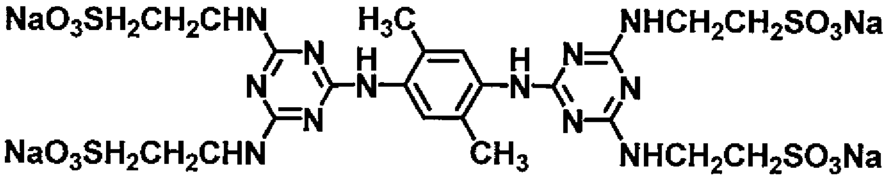

(P-24)

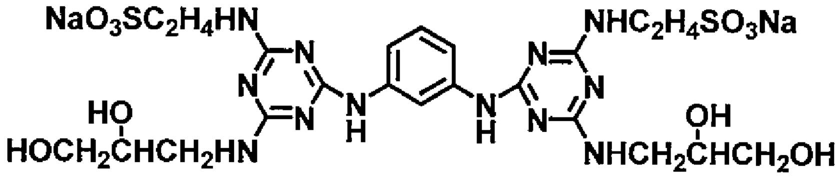

(P-25)

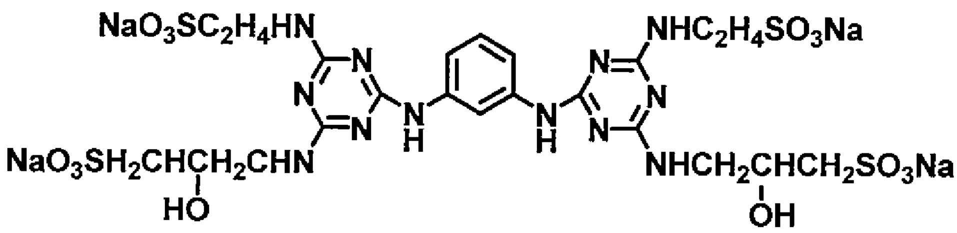

(P-26)

The content of the compound represented by general formula (II) in the dye ink composition (preferably, a dye ink composition for a cyan dye ink) according to the present invention is preferably 0.1% to 10.0% by mass, more preferably 0.3% to 5.0% by mass, still more preferably 0.5% to 4.0% by mass, particularly preferably 0.5% to 3.0% by mass, even still more preferably 1.0% to 3.0% by mass, and most preferably 2.5% to 3.0% by mass with respect to the total mass of the dye ink composition. This is because, while ejection reliability of the dye ink composition is ensured, the intermolecular interaction between the dye represented by general formula (I) and the compound (additive) represented by general formula (II) that coexist in the dye ink composition is enhanced after the formation of a printed article

to thereby reduce aggregation between phthalocyanine dye molecules, and thus the printing density (in particular, color developability on plain paper) is dramatically improved, and furthermore, the image durability (in particular, ozone resistance and light resistance) can also be satisfied.

The compound represented by general formula (II) can be synthesized by a publicly known method (for example, a method described in JP4686151B).

Chelating Agent

The dye ink composition according to the present invention may contain a chelating agent.

The chelating agent (also referred to as a "chelator") is a compound that binds to an inorganic or metal cation (particularly preferably, a polyvalent cation) to produce a chelate compound.

In the present invention, the chelating agent has a function of preventing the formation and growth (that is, functions as a solubilizing agent) of insoluble, precipitated foreign matter in a water-based ink composition, the foreign matter being derived from an inorganic or metal cation (in particular, a polyvalent cation).

When the dye ink composition (water-based ink composition) according to the present invention contains a chelating agent, the generation of precipitated foreign matter can be reduced even in a long-term storage of the water-based ink composition. Consequently, when an image is printed with an ink jet printer by using, as an ink for ink jet recording, the water-based ink composition after long-term storage, ink clogging in nozzles or the like is less likely to occur, and a printed article with a high quality can be obtained. The chelating agent that can be used in the present invention is not particularly limited, and various chelating agents can be used.

Recently, inks for ink jet recording have been experiencing a change from a cartridge ink to a large-volume ink-tank model, and further improvements in performance have been required for storage stability in long-term storage and for print quality and ejection stability of an ink after long-term storage. When the dye ink composition according to the present invention contains a chelating agent, there is provided an ink for ink jet recording, the ink having high storage stability in long-term storage and exhibiting high print quality and ejection stability after long-term storage.

The chelating agent may be any solubilizing agent that forms a complex with a cation that is present in the dye ink composition (water-based ink composition) to exhibit the effect of reducing the generation and growth of precipitated foreign matter in the water-based ink composition. Various types of such chelating agents may be used alone or in combination of two or more thereof. The chelating agent is preferably a water-soluble compound.

Examples of the chelating agent include ethylenediaminetetraacetic acid (EDTA) and salts thereof (e.g., EDTA-4 sodium (tetrasodium salt) and EDTA-4 lithium (tetralithium salt)), picolinic acid and salts thereof (e.g., picolinic acid sodium salt), quinolinic acid and salts thereof (e.g., quinolinic acid sodium salt), 1,10-phenanthroline, 8-hydroxyquinoline, 3-hydroxy-2,2'-iminodisuccinic acid tetrasodium salt, methylglycinediacetic acid (MGDA) and salts thereof, L-glutamic acid diacetic acid (GLDA) and salts thereof, L-aspartic acid diacetic acid (ASDA) and salts thereof, hydroxyethyliminodiacetic acid (HIDA) and salts thereof, 3-hydroxy-2,2'-iminodisuccinic acid (HIDS) and salts thereof, dicarboxymethyl glutamic acid (CMGA) and salts thereof, and (S,S)-ethylenediaminedisuccinic acid (EDDS) and salts thereof. The salts among the above chelating agents are preferably, for example, salts of ammonium, amine, or the like besides salts of a monovalent metal such as sodium, potassium, or lithium. In these chelating agents among the above chelating agents, a decrease in the chelating action with respect to a change in pH of the dye ink composition is further suppressed. Thus, the chelating action is exhibited in a wider pH range, and for example, it is possible to further improve the response of the chelating action to a change in pH of the dye ink composition, such as a change with time.

The content of the chelating agent is preferably 0.001% by mass or more and 1.1% by mass or less with respect to the total mass of the dye ink composition. The content is more preferably 0.001% by mass or more and 0.5% by mass or less, still more preferably 0.001% by mass or more and 0.3% by mass or less, and particularly preferably 0.001% by mass or more and 0.1% by mass or less. If the content is 0.001% by mass or more, the chelating action can be effectively exhibited. If the content is 1.1% by mass or less, it is possible to suppress an excessive increase in the viscosity of the dye ink composition and an excessive increase in pH thereof due to the addition of the chelating agent.

A ratio of the chelating agent to the dye (content of chelating agent based on mass:content of dye based on mass) in the dye ink composition is preferably in the range of from 0.0001:1 to 0.15:1 (chelating agent/dye is preferably from 0.0001 to 0.15). The ratio is more preferably in the range of from 0.0001:1 to 0.01:1, and still more preferably in the range of from 0.0002:1 to 0.005:1.

A metal salt may be formed when a metal is mixed during the manufacturing process of a dye or when a metal included in an ink container of a dye ink composition is eluted into the dye ink composition; however, if the ratio is within the above range, the generation of foreign matter that causes clogging of an ink jet head can be effectively suppressed. In addition, the chelating action can be effectively exhibited, and an excessive increase in the viscosity of the dye ink composition and an excessive increase in pH thereof can be suppressed.

The use of the dye ink composition according to the present invention is an image recording material for forming an image. Specific examples thereof include, besides an ink jet recording material described in detail below, a thermal

recording material, a pressure-sensitive recording material, a recording material for an electrophotographic method, a transfer-type silver halide photosensitive material, a printing ink, and a recording pen. The use of the dye ink composition is preferably an ink jet recording material, a thermal recording material, or a recording material for an electrophotographic method, and more preferably an ink jet recording material.

The dye ink composition according to the present invention is applicable to a color filter for recording/reproducing a color image used in a solid-state imaging element such as a charge-coupled device (CCD) or a display such as a liquid crystal display (LCD) or a plasma display panel (PDP), or a dye solution for dyeing various fibers.

In using the dye ink composition according to the present invention, physical properties such as solubility, dispersibility, and thermal mobility suitable for the use of the dye ink composition can be adjusted with substituents. The colorant used in the present invention can be used in a dissolved state, in an emulsified and dispersed state, and further, in a dispersed solid state depending on the system used.

The dye ink composition according to the present invention is particularly suitable for a dye ink for ink jet recording.

The dye ink composition according to the present invention can be produced by using, as a medium, water, further using a lipophilic medium or an aqueous medium, as needed, and dissolving and/or dispersing a coloring agent, a toning agent, and an additive in the medium.

Examples of the water include pure water such as deionized water, ion-exchange water, ultrafiltration water, reverse osmosis water, and distilled water; and ultrapure water.

The dye ink composition according to the present invention can contain other solvents in addition to water. The other solvents are preferably water-miscible organic solvents.

Examples of water-miscible organic solvents include alcohols (e.g., methanol, ethanol, propanol, isopropanol, butanol, isobutanol, sec-butanol, t-butanol, pentanol, hexanol, cyclohexanol, and benzyl alcohol); polyhydric alcohols (e.g., ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol); glycol derivatives (e.g., ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monoethyl ether, triethylene glycol monobutyl ether, and ethylene glycol monophenyl ether); amines (e.g., ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine, and tetramethylpropylenediamine); and other polar solvents (e.g., formamide, N,N-dimethylformamide, N,N-dimethylacetamide, dimethyl sulfoxide, sulfolane, 2-pyrrolidone, N-methyl-2-pyrrolidone, N-vinyl-2-pyrrolidone, 2-oxazolidone, 2-imidazolidinone, 1,3-dimethyl-2-imidazolidinone, acetonitrile, and acetone). Two or more water-miscible organic solvents may be used in combination.

In the dye ink composition according to the present invention, the water content is preferably 40% to 80% by mass, more preferably 45% to 70% by mass, and still more preferably 50% to 60% by mass with respect to the total mass of the ink composition from the viewpoints of ejection stability and storage stability of the ink.

When the dye ink composition according to the present invention contains a water-miscible organic solvent, the content of the water-miscible organic solvent is preferably 10% to 55% by mass, more preferably 20% to 50% by mass, and still more preferably 30% to 45% by mass with respect to the total mass of the ink composition.

The dye ink according to the present invention can optionally contain other additives as long as the effects of the present invention are not impaired.

Examples of the other additives include publicly known additives such as anti-drying agents (humectants), anti-fading agents, emulsion stabilizers, penetration enhancing agents, ultraviolet absorbers, preservatives, fungicides, pH adjusting agents, surface tension adjusting agents, anti-foaming agents, viscosity modifiers, dispersing agents, dispersion stabilizers, anticorrosives, and betaines (described in JP2003-306623A). These additives can be added directly to an ink liquid in the case of a water-soluble ink.

The surface tension adjusting agents are nonionic, cationic, or anionic surfactants. Preferred examples of the surfactants include anionic surfactants such as fatty acid salts, alkyl sulfuric acid ester salts, alkyl benzene sulfonates, alkyl naphthalene sulfonates, dialkyl sulfosuccinates, alkyl phosphoric acid ester salts, naphthalene sulfonic acid formalin condensates, and polyoxyethylene alkyl sulfuric acid ester salts; and nonionic surfactants such as polyoxyethylene alkyl ethers, polyoxyethylene alkyl allyl ethers, polyoxyethylene fatty acid esters, sorbitan fatty acid esters, polyoxyethylene sorbitan fatty acid esters, polyoxyethylene alkyl amines, glycerin fatty acid esters, and oxyethylene oxypropylene block copolymers. In addition, SURFYNOL (registered trademark) series, which are acetylene-based polyoxyethylene oxide surfactants, are also preferably used. An amine oxide amphoteric surfactant such as N,N-dimethyl-N-alkylamine oxide is also preferable. Furthermore, the agents described as surfactants on pages (37) and (38) of JP1984-157636A (JP-S59-157636A) and the research disclosure No. 308119 (1989) can also be used.

Preservative

In the present invention, the preservative refers to an agent having a function of preventing microorganisms, in particular, bacteria and fungi (mold) from generating and growing.
Example of the preservative include inorganic preservatives containing heavy-metal ions and organic preservatives. Examples of the organic preservatives that can be used include quaternary ammonium salts (such as tetrabutylammonium chloride, cetylpyridinium chloride, and benzyltrimethylammonium chloride), phenols (such as phenol, cresol, butylphenol, xylenol, and bisphenol), phenoxy ether derivatives (such as phenoxyethanol), heterocyclic compounds (such as benzotriazole, 1,2-benzisothiazolin-3-one, sodium dehydroacetate, and PROXEL (registered trademark) series manufactured by LONZA), alkane diols (such as pentylene glycol (1,2-pentanediol), isopentyldiol (3-methyl-1,3-butanediol), and hexanediol (1,2-hexanediol), etc.), and caprylyl glycol (1,2-octanediol), etc.), acid amides, carbamic acid, carbamates, amidines/guanidines, pyridines (such as sodium pyridinethione-1-oxide), diazines, triazines, pyrroles/imidazoles, oxazoles/oxazines, thiazoles/thiadiazines, thioureas, thiosemicarbazides, dithiocarbamates, sulfides, sulfoxides, sulfones, sulfamides, antibiotic substances (such as penicillin and tetracycline), aromatic carboxylic acid and salts thereof (such as sodium benzoate), and aromatic carboxylic acid esters and salts thereof (such as p-hydroxybenzoic acid ethyl ester).
The preservative is preferably at least one selected from the group consisting of heterocyclic compounds, phenols, phenoxy ether derivatives, and alkane diols, and more preferably a heterocyclic compound.
Preservatives described in, for example, Bokin Bobai Handbook (Antibacterial and antifungal handbook) (GIHODO SHUPPAN Co., Ltd.: 1986) and Bokin-bobai-zai Jiten (Encyclopedia of antibacterial and antifungal agents) (edited by encyclopedia editorial committee of The Society for Antibacterial and Antifungal Agents, Japan) can also be used as the preservatives.
These compounds that can be used may have a structure such as an oil-soluble structure or a water-soluble structure, but are preferably water-soluble compounds.
Two or more preservatives may be contained.
The heterocyclic compound is preferably a thiazole compound or a benzotriazole compound.
Thiazole compounds particularly function as fungicides among preservatives. Examples of thiazole compounds include benzisothiazoline, isothiazoline, 1,2-benzisothiazolin-3-one, 5-chloro-2-methyl-4-isothiazolin-3-one, 2-(thiocyanomethylthio)benzothiazole, 2-mercapto benzothiazole, and 3-allyloxy-1,2-benzisothiazole-1,1-oxide. PROXEL (registered trademark) series manufactured by LONZA can also be used as the thiazole fungicides.
Benzotriazole compounds particularly function as anticorrosives among preservatives and can prevent, for example, formation of rust, one cause of which is contact of a metal material (in particular, 42 alloy (nickel-iron alloy containing 42% nickel) constituting an ink jet head with an ink. Examples of benzotriazole compounds include 1H-benzotriazole, 4-methyl-1H-benzotriazole, 5-methyl-1H-benzotriazole, sodium salts thereof, and potassium salts thereof.
The preservative can be used in the dye ink composition according to the present invention in a wide content range. The content of the preservative is preferably 0.001% to 10% by mass, more preferably 0.005% to 2.0% by mass, still more preferably 0.01% to 0.5% by mass, and particularly preferably 0.01% to 0.1% by mass with respect to the total amount of the dye ink composition. When the content of the preservative is 0.001% to 10% by mass, the effect of the preservative can be more efficiently obtained, and generation of a precipitate can be reduced.

Ink Jet Recording Method

In an ink jet recording method according to the present invention, energy is provided to a dye ink for ink jet recording according to the present invention to form an image on a publicly known image-receiving material, that is, plain paper, resin coat paper, ink jet paper described in, for example, JP1996-169172A (JP-H08-169172A), JP1996-27693A (JP-H08-27693A), JP1990-276670A (JP-H02-276670A), JP1995-276789A (JP-H07-276789A), JP1997-323475A (JP-H09-323475A), JP1987-238783A (JP-S62-238783A), JP1998-153989A (JP-H10-153989A), JP1998-217473A (JP-H10-217473A), JP1998-235995A (JP-H10-235995A), JP1998-337947A (JP-H10-337947A), and JP1998-217597A (JP-H10-217597A), a film, paper for common use in electrophotography, a textile, glass, metal, ceramic, or the like.
In the formation of an image, a polymer latex compound may be used in combination for the purpose of providing glossiness and water resistance and improving weather resistance.
The recording method of the ink jet recording method according to the present invention is not limited, and any publicly known method is employed. Examples thereof include a charge control method of utilizing an electrostatic attraction force to eject an ink; a drop-on-demand method (pressure pulse method) utilizing vibration pressure of a piezo element; an acoustic ink jet method including changing electric signals to acoustic beams and applying the acoustic beams to an ink to eject the ink by utilizing the radiation pressure; and a thermal ink jet method including heating an ink to form bubbles and utilizing the generated pressure. The ink jet recording method includes a method including ejecting

a large number of droplets of a low-density ink called a photo ink with a small volume, a method in which the image quality is improved by using a plurality of inks having substantially the same hue but different densities, and a method of using a colorless, transparent ink.

Physical Properties of Dye Ink Composition

The surface tension of the dye ink composition according to the present invention is preferably 10 mN/m or more and 60 mN/m or less, more preferably 20 mN/m or more and 60 mN/m or less, and still more preferably 30 mN/m or more and 40 mN/m or less, at 25°C. When the dye ink composition according to the present invention has a surface tension within the above range, the occurrence of, for example, misdirected ejection (deviation of a landing point of an ink) due to wetting near ejection ports caused when the dye ink composition is used in an ink jet method can be effectively suppressed. The surface tension of the ink can be adjusted by appropriately determining the contents of the surfactant and the like in the dye ink composition. The pH of the dye ink composition according to the present invention is preferably adjusted to a desired value so as to achieve good ejection properties when the dye ink composition is used in an ink jet recording apparatus. The dye ink composition according to the present invention preferably has a viscosity of 1.0 mPa·s or more and 5.0 mPa·s or less, at 25°C.

Ink Cartridge and Ink Jet Printer

The dye ink composition according to the present invention can be contained in an ink cartridge and used in the form of the ink cartridge. This is also preferred from the viewpoint of, for example, the ease of handling. Such an ink cartridge is publicly known in this technical field, and an ink cartridge can be produced by appropriately employing a publicly known method.

The ink cartridge can be used in an ink jet printer.

The ink cartridge can be used for, for example, typical writing materials, recorders, and pen plotters, but is particularly preferably used for an ink jet recording method.

Ink Jet Recording Method and Ink Jet Recording Apparatus

An ink jet recording method according to the present invention has an image recording step of ejecting a dye ink for ink jet recording, the dye ink including the above-described dye ink composition according to the present invention, by using an ink jet recording head to record an image on a recording medium. In the image recording step, besides the above-described dye ink composition (preferably, a cyan dye ink composition) according to the present invention, a magenta dye ink composition, a yellow dye ink composition, and a black dye ink composition can be used as an ink set. An ink jet recording apparatus according to the present invention includes an ink container that contains a dye ink and a recording head configured to eject the ink. The dye ink contained in the ink container corresponds to the above-described cyan dye ink composition according to the present invention, the magenta dye ink composition, the yellow dye ink composition, and the black dye ink composition. The steps and configurations of the ink jet recording method and recording apparatus may be publicly known steps and configurations, respectively.

Any recording medium that can be used for typical ink jet recording can be used as a recording medium on which an image is recorded by using the dye ink composition according to the present invention. Examples of such a recording medium include ink jet recording media having a porous layer on a support, such as glossy paper, coated paper, and glossy films; and plain paper in which fibers are exposed on at least part of the surface, such as so-called copy paper.

EXAMPLES

Hereafter, the present invention will be described in detail with reference to Examples, but the present invention is not limited to these Examples.

Example 1

Preparation of Cyan Dye Ink Composition 1

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device

was washed with 10 g of deionized water to collect an ink residue. Ten grams of the deionized water used for collecting the ink residue was added to 90 g of the mixture that had been previously filtered to prepare a cyan dye ink composition 1 (100 g).

| | |
|---|---|
| Cyan dye (C-1) | 4.00 g |
| Additive (P-4) | 0.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

The above preservative is PROXEL (registered trademark) XL2 (s) manufactured by LONZA. Preservatives used in Examples and Comparative Examples below are also the same.

The above surfactant is SURFYNOL (registered trademark) 465 manufactured by Nisshin Chemical Industry Co., Ltd. Surfactants used in Examples and Comparative Examples below are also the same.

Example 2

Preparation of Cyan Dye Ink Composition 2

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 2 (100 g).

| | |
|---|---|
| Cyan dye (C-1) | 4.00 g |
| Additive (P-4) | 1.00 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 3

Preparation of Cyan Dye Ink Composition 3

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 3 (100 g).

| | |
|---|---|
| Cyan dye (C-1) | 4.00 g |
| Additive (P-4) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 4

Preparation of Cyan Dye Ink Composition 4

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 4 (100 g).

| | |
|---|---|
| Cyan dye (C-1) | 4.00 g |
| Additive (P-4) | 2.00 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 5

Preparation of Cyan Dye Ink Composition 5

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 5 (100 g).

| | |
|---|---|
| Cyan dye (C-1) | 4.00 g |
| Additive (P-4) | 2.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |

(continued)

| | |
|---|---|
| 1,2-Hexanediol | 1.30 g |
| Propylene glycol | 0.12 g |
| Surfactant | 1.00 g |

Example 6

Preparation of Cyan Dye Ink Composition 6

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 6 (100 g).

| | |
|---|---|
| Cyan dye (C-1) | 4.00 g |
| Additive (P-4) | 3.00 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 7

Preparation of Cyan Dye Ink Composition 7

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 7 (100 g).

| | |
|---|---|
| Cyan dye (C-4) | 4.00 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 8

Preparation of Cyan Dye Ink Composition 8

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 8 (100 g).

| | |
|---|---|
| Cyan dye (C-4) | 3.60 g |
| Cyan dye (C-22) | 0.40 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 9

Preparation of Cyan Dye Ink Composition 9

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 9 (100 g).

| | |
|---|---|
| Cyan dye (C-12) | 4.00 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 10

Preparation of Cyan Dye Ink Composition 10

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device

was washed with 10 g of deionized water to collect an ink residue. Ten grams of the deionized water used for collecting the ink residue was added to 90 g of the mixture that had been previously filtered to prepare a cyan dye ink composition 10 (100 g).

| | |
|---|---|
| Cyan dye (C-12) | 4.00 g |
| Additive (P-3) | 3.00 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 11

Preparation of Cyan Dye Ink Composition 11

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 11 (100 g).

| | |
|---|---|
| Cyan dye (C-12) | 3.60 g |
| Cyan dye (C-22) | 0.40 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 12

Preparation of Cyan Dye Ink Composition 12

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 12 (100 g).

| | |
|---|---|
| Cyan dye (C-12) | 3.20 g |
| Cyan dye (C-22) | 0.80 g |
| Additive (P-3) | 1.50 g |

(continued)

| | |
|---|---|
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 13

Preparation of Cyan Dye Ink Composition 13

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 13 (100 g).

| | |
|---|---|
| Cyan dye (C-16) | 4.00 g |
| Additive (P-4) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 14

Preparation of Cyan Dye Ink Composition 14

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 14 (100 g).

| | |
|---|---|
| Cyan dye (C-16) | 4.00 g |
| Additive (P-4) | 3.00 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |

(continued)

| | |
|---|---|
| Surfactant | 1.00 g |

Example 15

Preparation of Cyan Dye Ink Composition 15

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 15 (100 g).

| | |
|---|---|
| Cyan dye (C-16) | 3.60 g |
| Cyan dye (C-21) | 0.40 g |
| Additive (P-4) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 16

Preparation of Cyan Dye Ink Composition 16

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 16 (100 g).

| | |
|---|---|
| Cyan dye (C-16) | 3.60 g |
| Cyan dye (C-21) | 0.40 g |
| Additive (P-4) | 3.00 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 17

Preparation of Cyan Dye Ink Composition 17

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 17 (100 g).

| | |
|---|---|
| Cyan dye (C-12) | 3.60 g |
| Cyan dye (D. B. 199) | 0.40 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 18

Preparation of Cyan Dye Ink Composition 18

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 18 (100 g).

| | |
|---|---|
| Cyan dye (C-12) | 3.60 g |
| Cyan dye (A. B. 9) | 0.40 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 19

Preparation of Cyan Dye Ink Composition 19

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed

under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 19 (100 g).

| | |
|---|---|
| Cyan dye (C-12) | 3.60 g |
| Cyan dye (C-22) | 0.20 g |
| Cyan dye (D. B. 199) | 0.20 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 20

Preparation of Cyan Dye Ink Composition 20

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 20 (100 g).

| | |
|---|---|
| Cyan dye (C-12) | 3.60 g |
| Cyan dye (C-22) | 0.20 g |
| Cyan dye (A. B. 9) | 0.20 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 21

Preparation of Cyan Dye Ink Composition 21

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 21 (100 g).

| | |
|---|---|
| Cyan dye (C-1) | 4.00 g |
| Additive (P-1) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 22

Preparation of Cyan Dye Ink Composition 22

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 22 (100 g).

| | |
|---|---|
| Cyan dye (C-1) | 4.00 g |
| Additive (P-1) | 3.00 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 23

Preparation of Cyan Dye Ink Composition 23

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 23 (100 g).

| | |
|---|---|
| Cyan dye (C-1) | 3.60 g |
| Cyan dye (C-21) | 0.40 g |
| Additive (P-1) | 1.50 g |
| Preservative | 0.11 g |
| Glycerin | 9.70 g |
| Triethylene glycol | 3.40 g |
| Triethylene glycol monobutyl ether | 9.90 g |

(continued)

| | |
|---|---|
| 2-Pyrrolidone | 2.50 g |
| 1,2-Hexanediol | 1.30 g |
| Propylene glycol | 0.12 g |
| Surfactant | 1.00 g |

Example 24

Preparation of Cyan Dye Ink Composition 24

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 24 (100 g).

| | |
|---|---|
| Cyan dye (C-1) | 3.60 g |
| Cyan dye (D. B. 199) | 0.40 g |
| Additive (P-1) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 25

Preparation of Cyan Dye Ink Composition 25

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 25 (100 g).

| | |
|---|---|
| Cyan dye (C-1) | 3.60 g |
| Cyan dye (A. B. 9) | 0.40 g |
| Additive (P-1) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 26

Preparation of Cyan Dye Ink Composition 26

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 26 (100 g).

| | |
|---|---|
| Cyan dye (C-1) | 3.60 g |
| Cyan dye (C-21) | 0.20 g |
| Cyan dye (D. B. 199) | 0.20 g |
| Additive (P-1) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 27

Preparation of Cyan Dye Ink Composition 27

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 27 (100 g).

| | |
|---|---|
| Cyan dye (C-1) | 3.60 g |
| Cyan dye (C-21) | 0.20 g |
| Cyan dye (A. B. 9) | 0.20 g |
| Additive (P-4) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 28

Preparation of Cyan Dye Ink Composition 28

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 28 (100 g).

| | |
|---|---|
| Cyan dye (C-1) | 4.00 g |
| Additive (P-2) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 29

Preparation of Cyan Dye Ink Composition 29

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 29 (100 g).

| | |
|---|---|
| Cyan dye (C-1) | 3.00 g |
| Additive (P-4) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 30

Preparation of Cyan Dye Ink Composition 30

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting

the ink residue was added to 90 g of the mixture that had been previously filtered to prepare a cyan dye ink composition 30 (100 g).

| | |
|---|---|
| Cyan dye (C-1) | 5.00 g |
| Additive (P-4) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 31

Preparation of Cyan Dye Ink Composition 31

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 31 (100 g).

| | |
|---|---|
| Cyan dye (C-1) | 4.00 g |
| Additive (P-4) | 1.50 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Example 32

Preparation of Cyan Dye Ink Composition 32

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 32 (100 g).

| | |
|---|---|
| Cyan dye (C-1) | 4.00 g |
| Additive (P-4) | 3.00 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |

(continued)

| | |
|---|---|
| Surfactant | 0.50 g |

Example 33

Preparation of Cyan Dye Ink Composition 33

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 33 (100 g).

| | |
|---|---|
| Cyan dye (C-1) | 4.00 g |
| Additive (P-13) | 1.50 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Example 34

Preparation of Cyan Dye Ink Composition 34

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 34 (100 g).

| | |
|---|---|
| Cyan dye (C-1) | 4.00 g |
| Additive (P-13) | 3.00 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Example 35

Preparation of Cyan Dye Ink Composition 35

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting

the ink residue was added to 90 g of the mixture that had been previously filtered to prepare a cyan dye ink composition 35 (100 g).

| | |
|---|---|
| Cyan dye (C-1) | 3.60 g |
| Cyan dye (C-21) | 0.40 g |
| Additive (P-4) | 1.50 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Example 36

Preparation of Cyan Dye Ink Composition 36

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 36 (100 g).

| | |
|---|---|
| Cyan dye (C-4) | 3.60 g |
| Cyan dye (C-22) | 0.40 g |
| Additive (P-3) | 1.50 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Example 37

Preparation of Cyan Dye Ink Composition 37

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 37 (100 g).

| | |
|---|---|
| Cyan dye (C-16) | 3.60 g |
| Cyan dye (C-21) | 0.40 g |
| Additive (P-4) | 1.50 g |
| Preservative | 0.11 g |
| Glycerin | 7.00 g |
| Ethylene urea | 7.00 g |
| 1,5-Pentanediol | 7.00 g |

(continued)

| | |
|---|---|
| 2-Pyrrolidone | 5.00 g |
| Surfactant | 0.50 g |

Example 38

Preparation of Cyan Dye Ink Composition 38

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 $\mu$m. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 38 (100 g).

| | |
|---|---|
| Cyan dye (C-1) | 3.60 g |
| Cyan dye (C-21) | 0.20 g |
| Cyan dye (D. B. 199) | 0.20 g |
| Additive (P-4) | 1.50 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Example 39

Preparation of Cyan Dye Ink Composition 39

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 $\mu$m. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 39 (100 g).

| | |
|---|---|
| Cyan dye (C-1) | 3.60 g |
| Cyan dye (C-21) | 0.20 g |
| Cyan dye (A. | B. 9) 0.20 g |
| Additive (P-4) | 1.50 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Example 40

Preparation of Cyan Dye Ink Composition 40

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 40 (100 g).

| | |
|---|---|
| Cyan dye (C-1) | 2.70 g |
| Cyan dye (C-21) | 0.30 g |
| Additive (P-4) | 3.00 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Example 41

Preparation of Cyan Dye Ink Composition 41

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 41 (100 g).

| | |
|---|---|
| Cyan dye (C-1) | 4.00 g |
| Additive (P-4) | 2.50 g |
| EDTA (tetralithium salt) | 0.05 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 42

Preparation of Cyan Dye Ink Composition 42

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting

the ink residue was added to 90 g of the mixture that had been previously filtered to prepare a cyan dye ink composition 42 (100 g).

| | |
|---|---|
| Cyan dye (C-12) | 4.00 g |
| Additive (P-3) | 2.50 g |
| EDTA (tetrasodium salt) | 0.05 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 43

Preparation of Cyan Dye Ink Composition 43

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 43 (100 g).

| | |
|---|---|
| Cyan dye (C-1) | 3.60 g |
| Cyan dye (C-21) | 0.40 g |
| Additive (P-4) | 1.00 g |
| EDTA (tetralithium salt) | 0.03 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 44

Preparation of Cyan Dye Ink Composition 44

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 44 (100 g).

| | |
|---|---|
| Cyan dye (C-12) | 3.60 g |
| Cyan dye (C-22) | 0.40 g |

(continued)

| | |
|---|---|
| Additive (P-3) | 1.00 g |
| EDTA (tetrasodium salt) | 0.03 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 45

Preparation of Cyan Dye Ink Composition 45

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 45 (100 g).

| | |
|---|---|
| Cyan dye (C-16) | 3.60 g |
| Cyan dye (C-21) | 0.40 g |
| Additive (P-4) | 1.00 g |
| EDTA (tetralithium salt) | 0.03 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Example 46

Preparation of Cyan Dye Ink Composition 46

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 46 (100 g).

| | |
|---|---|
| Cyan dye (C-1) | 4.00 g |
| Additive (P-4) | 2.50 g |
| EDTA (tetralithium salt) | 0.05 g |
| Preservative | 0.11 g |
| Glycerin | 7.00 g |

(continued)

| | |
|---|---|
| Ethylene urea | 7.00 g |
| 1,5-Pentanediol | 7.00 g |
| 2-Pyrrolidone | 5.00 g |
| Surfactant | 0.50 g |

Example 47

Preparation of Cyan Dye Ink Composition 47

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 47 (100 g).

| | |
|---|---|
| Cyan dye (C-12) | 4.00 g |
| Additive (P-3) | 2.50 g |
| EDTA (tetrasodium salt) | 0.05 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Example 48

Preparation of Cyan Dye Ink Composition 48

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 48 (100 g).

| | |
|---|---|
| Cyan dye (C-1) | 3.60 g |
| Cyan dye (C-21) | 0.40 g |
| Additive (P-4) | 1.00 g |
| EDTA (tetralithium salt) | 0.03 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Example 49

Preparation of Cyan Dye Ink Composition 49

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 49 (100 g).

| | |
|---|---|
| Cyan dye (C-12) | 3.60 g |
| Cyan dye (C-22) | 0.40 g |
| Additive (P-3) | 1.00 g |
| EDTA (tetrasodium salt) | 0.03 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Example 50

Preparation of Cyan Dye Ink Composition 50

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a cyan dye ink composition 50 (100 g).

| | |
|---|---|
| Cyan dye (C-16) | 3.60 g |
| Cyan dye (C-21) | 0.40 g |
| Additive (P-4) | 1.00 g |
| EDTA (tetralithium salt) | 0.03 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Comparative Example 1

Preparation of Comparative Cyan Dye Ink Composition 1

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting

the ink residue was added to 90 g of the mixture that had been previously filtered to prepare a comparative cyan dye ink composition 1 (100 g).

| | |
|---|---|
| Cyan dye (C-1) | 4.00 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Comparative Example 2

Preparation of Comparative Cyan Dye Ink Composition 2

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 2 (100 g).

| | |
|---|---|
| Cyan dye (C-1) | 5.00 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Comparative Example 3

Preparation of Comparative Cyan Dye Ink Composition 3

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 3 (100 g).

| | |
|---|---|
| Cyan dye (C-22) | 4.00 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |

(continued)

| | |
|---|---|
| Propylene glycol | 0.12 g |
| Surfactant | 1.00 g |

Comparative Example 4

Preparation of Comparative Cyan Dye Ink Composition 4

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 4 (100 g).

| | |
|---|---|
| Cyan dye (C-22) | 3.60 g |
| Cyan dye (A. B. 9) | 0.40 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Comparative Example 5

Preparation of Comparative Cyan Dye Ink Composition 5

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 5 (100 g).

| | |
|---|---|
| Cyan dye (C-22) | 3.60 g |
| Cyan dye (D. B. 199) | 0.40 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Comparative Example 6

Preparation of Comparative Cyan Dye Ink Composition 6

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 6 (100 g).

| | |
|---|---|
| Cyan dye (C-22) | 3.60 g |
| Cyan dye (A. B. 9) | 0.40 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Comparative Example 7

Preparation of Comparative Cyan Dye Ink Composition 7

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 7 (100 g).

| | |
|---|---|
| Cyan dye (C-22) | 3.60 g |
| Cyan dye (D. B. 199) | 0.40 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Comparative Example 8

Preparation of Comparative Cyan Dye Ink Composition 8

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed

under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 8 (100 g).

| | |
|---|---|
| Cyan dye (C-22) | 0.40 g |
| Cyan dye (A. B. 9) | 3.60 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Comparative Example 9

Preparation of Comparative Cyan Dye Ink Composition 9

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 9 (100 g).

| | |
|---|---|
| Cyan dye (C-22) | 0.40 g |
| Cyan dye (D. B. 199) | 3.60 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Comparative Example 10

Preparation of Comparative Cyan Dye Ink Composition 10

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 10 (100 g).

| | |
|---|---|
| Cyan dye (A. B. 9) | 4.00 g |

(continued)

| | |
|---|---|
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Comparative Example 11

Preparation of Comparative Cyan Dye Ink Composition 11

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 11 (100 g).

| | |
|---|---|
| Cyan dye (D. B. 199) | 4.00 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Comparative Example 12

Preparation of Comparative Cyan Dye Ink Composition 12

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 12 (100 g).

| | |
|---|---|
| Cyan dye (A. B. 9) | 2.00 g |
| Cyan dye (D. B. 199) | 2.00 g |
| Additive (P-3) | 1.50 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |

(continued)

| | |
|---|---|
| 1,2-Hexanediol | 1.30 g |
| Propylene glycol | 0.12 g |
| Surfactant | 1.00 g |

Comparative Example 13

Preparation of Comparative Cyan Dye Ink Composition 13

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 13 (100 g).

| | |
|---|---|
| Cyan dye (C-12) | 3.60 g |
| Cyan dye (D. B. 199) | 0.20 g |
| Cyan dye (A. B. 9) | 0.20 g |
| Preservative | 0.11 g |
| Glycerin | 9.70 g |
| Triethylene glycol | 3.40 g |
| Triethylene glycol monobutyl ether | 9.90 g |
| 2-Pyrrolidone | 2.50 g |
| 1,2-Hexanediol | 1.30 g |
| Propylene glycol | 0.12 g |
| Surfactant | 1.00 g |

Comparative Example 14

Preparation of Comparative Cyan Dye Ink Composition 14

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 14 (100 g).

| | |
|---|---|
| Cyan dye (C-1) | 4.00 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Comparative Example 15

Preparation of Comparative Cyan Dye Ink Composition 15

Deionized water was added to a mixture including components below in the corresponding amounts below up

to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 15 (100 g).

| | |
|---|---|
| Cyan dye (C-1) | 5.00 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Comparative Example 16

Preparation of Comparative Cyan Dye Ink Composition 16

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 16 (100 g).

| | |
|---|---|
| Cyan dye (C-21) | 4.00 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Comparative Example 17

Preparation of Comparative Cyan Dye Ink Composition 17

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 17 (100 g).

| | |
|---|---|
| Cyan dye (C-21) | 3.60 g |
| Cyan dye (A. B. 9) | 0.40 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Comparative Example 18

Preparation of Comparative Cyan Dye Ink Composition 18

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 18 (100 g).

| | |
|---|---|
| Cyan dye (C-21) | 3.60 g |
| Cyan dye (D. B. 199) | 0.40 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Comparative Example 19

Preparation of Comparative Cyan Dye Ink Composition 19

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 19 (100 g).

| | |
|---|---|
| Cyan dye (C-21) | 3.60 g |
| Cyan dye (A. B. 9) | 0.40 g |
| Additive (P-4) | 1.50 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Comparative Example 20

Preparation of Comparative Cyan Dye Ink Composition 20

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous lithium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 20 (100 g).

| | |
|---|---|
| Cyan dye (C-21) | 3.60 g |
| Cyan dye (D. B. 199) | 0.40 g |
| Additive (P-4) | 1.50 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Comparative Example 21

Preparation of Comparative Cyan Dye Ink Composition 21

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 21 (100 g).

| | |
|---|---|
| Cyan dye (C-22) | 0.40 g |
| Cyan dye (A. B. 9) | 3.60 g |
| Additive (P-3) | 1.50 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Comparative Example 22

Preparation of Comparative Cyan Dye Ink Composition 22

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 22 (100 g).

| | |
|---|---|
| Cyan dye (C-22) | 3.60 g |
| Cyan dye (D. B. 199) | 0.40 g |
| Additive (P-3) | 1.50 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Comparative Example 23

Preparation of Comparative Cyan Dye Ink Composition 23

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 23 (100 g).

| | |
|---|---|
| Cyan dye (A. B. 9) | 4.00 g |
| Additive (P-3) | 1.50 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Comparative Example 24

Preparation of Comparative Cyan Dye Ink Composition 24

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 24 (100 g).

| | |
|---|---|
| Cyan dye (D. B. 199) | 4.00 g |
| Additive (P-3) | 1.50 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Comparative Example 25

Preparation of Comparative Cyan Dye Ink Composition 25

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 25 (100 g).

| | |
|---|---|
| Cyan dye (D. B. 199) | 2.00 g |

(continued)

| | |
|---|---|
| Cyan dye (A. B. 9) | 2.00 g |
| Additive (P-3) | 1.50 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

Comparative Example 26

Preparation of Comparative Cyan Dye Ink Composition 26

Deionized water was added to a mixture including components below in the corresponding amounts below up to a total weight of 90 g, and the resulting mixture was then stirred for one hour under heating at 30°C to 40°C. Subsequently, the pH was adjusted to 9.0 with a 10 mol/L aqueous sodium hydroxide solution, and filtration was performed under reduced pressure with a microfilter having an average pore size of 0.25 μm. Subsequently, the filtration device was washed with 10 g of deionized water to collect an ink residue. Ten grams of the deionized water used for collecting the ink residue was added to 90 g of the mixture that had been previously filtered to prepare a comparative cyan dye ink composition 26 (100 g).

| | |
|---|---|
| Cyan dye (C-12) | 3.60 g |
| Cyan dye (D. B. 199) | 0.20 g |
| Cyan dye (A. B. 9) | 0.20 g |
| Preservative | 0.11 g |
| Glycerin | 7.00 g |
| Ethylene urea | 7.00 g |
| 1,5-Pentanediol | 7.00 g |
| 2-Pyrrolidone | 5.00 g |
| Surfactant | 0.50 g |

The above cyan dye (D. B. 199) represents C.I. Direct Blue 199.
The above cyan dye (A. B. 9) represents C.I. Acid Blue 9.

Image Recording and Evaluation

Image recording was performed as follows by using the cyan dye ink compositions prepared above, and the evaluation was performed. In each of Examples and Comparative Examples, the image recording was performed with a combination of the following ink jet printer and recording paper, and a practical test was performed.
In each of Examples and Comparative Examples, a cyan single-color image was formed by using each cyan dye ink composition alone.
In Examples 1 to 30, 41 to 45, and Comparative Examples 1 to 13, each cyan dye ink composition was loaded in an ink cartridge, and images that were recorded on photo paper (ink jet paper) (Photo Paper <Glossy> manufactured by SEIKO EPSON CORPORATION) and plain paper (Xerox P paper: manufactured by Fuji Xerox Co., Ltd.) using an ink jet printer (PM-700C; manufactured by SEIKO EPSON CORPORATION) were evaluated.
In Examples 31 to 40, 46 to 50, and Comparative Examples 14 to 26, each cyan dye ink composition was loaded in an ink cartridge, and images that were recorded on ink jet paper (Photo Glossy Paper PT-201; manufactured by Canon Inc.) and plain paper (Xerox P paper: manufactured by Fuji Xerox Co., Ltd.) using an ink jet printer (PIXUS Pro9000 MkII; manufactured by Canon Inc.) were evaluated.

Printing Density (Color Developability)

A solid image (an image printed at an applied voltage of 100%) was recorded by using each cyan dye ink composition with a combination of the ink jet printer and recording paper described above.

The printing density of the formed solid image was measured with a reflection densitometer (trade name: X-Rite 310TR, manufactured by X-Rite Inc.). Each cyan single-color image was evaluated in the following four grades in terms of printing density (optical density) determined when a red filter was used.

(Ink jet paper)

A: 2.0 or more
B: 1.8 or more and less than 2.0
C: 1.7 or more and less than 1.8
D: less than 1.7

(Plain paper)

A: 0.90 or more
B: 0.85 or more and less than 0.90
C: 0.80 or more and less than 0.85
D: less than 0.80

Ozone Resistance

While dry air was passed through two coaxial glass tubes of a Siemens ozonizer, an alternating voltage of 5 kV was applied to provide an ozone gas concentration of 10 $\pm$ 0.1 ppm (parts per million) in a box serving as a dark place at room temperature (23°C; relative humidity 50%). Paper on which an image was formed was left to stand in the box for five days. The image density of the image after being left to stand in ozone gas was measured with a reflection densitometer (trade name: X-Rite 310TR, manufactured by X-Rite Inc.). A colorant residual ratio was calculated from the initial image density Ci and the image density Cf2 after being left to stand in ozone gas, and the evaluation was performed. The colorant residual ratio was measured on an image portion having an initial image density of 1.0 $\pm$ 0.2. The ozone gas concentration in the box was controlled by using an ozone gas monitor (model: OZG-EM-01) manufactured by APPLICS Co., Ltd.

A red filter used for measurement of a cyan image density was used. The colorant residual ratio was determined by the following formula, and ozone resistance was evaluated in accordance with the criteria below.

$$\text{Colorant residual ratio (\%)} = (\text{Cf2}/\text{Ci}) \times 100$$

AA: The colorant residual ratio is 85% or more and less than 95%.
A: The colorant residual ratio is 80% or more and less than 85%.
B: The colorant residual ratio is 75% or more and less than 80%.
C: The colorant residual ratio is 70% or more and less than 75%.
D: The colorant residual ratio is less than 70%.

Light Resistance

The image density Ci immediately after recording was measured. Subsequently, the image was irradiated with xenon light (100 klux, 23°C, relative humidity 50%; SC37 filter that cuts off wavelengths of 370 nm or less was used in combination) for 28 days by using a weather meter (Atlas C. 165). The image density Cf1 was then measured again. The colorant residual ratio was calculated from the image densities before and after the irradiation with xenon light, and the evaluation was performed. The image density was measured with a reflection densitometer (trade name: X-Rite 310TR, manufactured by X-Rite Inc.). The colorant residual ratio was measured on an image portion having an initial image density of 1.0 $\pm$ 0.2.

A red filter used for measurement of a cyan image density was used. The colorant residual ratio was determined by the following formula, and light resistance was evaluated in accordance with the criteria below.

$$\text{Colorant residual ratio (\%)} = (\text{Cf1}/\text{Ci}) \times 100$$

A: The colorant residual ratio is 90% or more and less than 95%.
B: The colorant residual ratio is 80% or more and less than 90%.
C: The colorant residual ratio is 70% or more and less than 80%.
D: The colorant residual ratio is less than 70%.

The results of Examples 1 to 50 are shown in Tables 1 and 2 below. The results of Comparative Examples 1 to 26 are shown in Table 3 below.

Table 1

| | Printing density | | Ozone resistance | Light resistance |
|---|---|---|---|---|
| | Plain paper | Ink jet paper | | |
| Example 1 | B | A | AA | A |
| Example 2 | B | A | AA | A |
| Example 3 | B | A | AA | A |
| Example 4 | B | A | AA | A |
| Example 5 | A | A | AA | A |
| Example 6 | A | A | AA | A |
| Example 7 | B | A | AA | A |
| Example 8 | A | A | A | A |
| Example 9 | B | A | AA | A |
| Example 10 | A | A | AA | A |
| Example 11 | A | A | A | A |
| Example 12 | A | A | B | A |
| Example 13 | B | A | AA | A |
| Example 14 | A | A | AA | A |
| Example 15 | A | A | A | A |
| Example 16 | A | A | A | A |
| Example 17 | B | A | B | A |
| Example 18 | A | A | B | B |
| Example 19 | A | A | B | A |
| Example 20 | A | A | B | B |
| Example 21 | B | A | AA | A |
| Example 22 | A | A | AA | A |
| Example 23 | A | A | A | A |
| Example 24 | B | A | B | A |
| Example 25 | A | A | B | B |
| Example 26 | A | A | B | A |
| Example 27 | A | A | B | B |
| Example 28 | B | A | AA | A |
| Example 29 | B | A | AA | A |

(continued)

| | Printing density | | Ozone resistance | Light resistance |
|---|---|---|---|---|
| | Plain paper | Ink jet paper | | |
| Example 30 | A | A | AA | A |
| Example 31 | B | A | AA | A |
| Example 32 | A | A | AA | A |
| Example 33 | B | A | AA | A |
| Example 34 | A | A | AA | A |
| Example 35 | A | A | A | A |
| Example 36 | A | A | A | A |
| Example 37 | A | A | A | A |
| Example 38 | A | A | B | A |
| Example 39 | A | A | B | B |
| Example 40 | B | A | AA | A |

Table 2

| | Printing density | | Ozone resistance | Light resistance |
|---|---|---|---|---|
| | Plain paper | Ink jet paper | | |
| Example 41 | A | A | AA | A |
| Example 42 | A | A | AA | A |
| Example 43 | A | A | AA | A |
| Example 44 | A | A | AA | A |
| Example 45 | A | A | AA | A |
| Example 46 | A | A | AA | A |
| Example 47 | A | A | AA | A |
| Example 48 | A | A | AA | A |
| Example 49 | A | A | AA | A |
| Example 50 | A | A | AA | A |

Table 3

| | Printing density | | Ozone resistance | Light resistance |
|---|---|---|---|---|
| | Plain paper | Ink jet paper | | |
| Comparative Example 1 | C | A | A | A |
| Comparative Example 2 | C | A | A | A |
| Comparative Example 3 | C | B | c | B |
| Comparative Example 4 | C | A | D | D |
| Comparative Example 5 | C | B | D | B |
| Comparative Example 6 | C | A | D | D |
| Comparative Example 7 | C | B | D | A |

(continued)

| | Printing density | | Ozone resistance | Light resistance |
|---|---|---|---|---|
| | Plain paper | Ink jet paper | | |
| Comparative Example 8 | B | A | D | D |
| Comparative Example 9 | C | A | D | A |
| Comparative Example 10 | A | A | D | D |
| Comparative Example 11 | C | A | D | A |
| Comparative Example 12 | B | A | D | D |
| Comparative Example 13 | C | A | c | c |
| Comparative Example 14 | C | A | A | A |
| Comparative Example 15 | C | A | A | A |
| Comparative Example 16 | C | B | c | B |
| Comparative Example 17 | C | A | D | D |
| Comparative Example 18 | C | B | D | B |
| Comparative Example 19 | C | A | D | D |
| Comparative Example 20 | C | B | D | A |
| Comparative Example 21 | B | A | D | D |
| Comparative Example 22 | C | A | D | A |
| Comparative Example 23 | A | A | D | D |
| Comparative Example 24 | C | A | D | A |
| Comparative Example 25 | B | A | D | D |
| Comparative Example 26 | C | A | c | c |

Ejection Stability

Ejection stability of inks was evaluated as follows. Each of the inks 1 to 30 and 41 to 45 for ink jet recording prepared in Examples 1 to 30 and 41 to 45 was loaded in an ink cartridge for an ink jet recording apparatus (trade name: PM-700C, manufactured by SEIKO EPSON CORPORATION). The cartridge was installed in the ink jet recording apparatus, and ejection of the ink from all nozzles was confirmed. Subsequently, printing was performed on 100 sheets with A4 size (ink jet paper, Photo Paper <Glossy> manufactured by SEIKO EPSON CORPORATION), and the evaluation was performed in accordance with the criteria below.

Each of the inks 31 to 40 and 46 to 50 for ink jet recording prepared in Examples 31 to 40 and 46 to 50 was loaded in an ink cartridge for an ink jet recording apparatus (trade name: PIXUS Pro9000 MkII, manufactured by Canon Inc.). The cartridge was installed in the ink jet recording apparatus, and ejection of the ink from all nozzles was confirmed. Subsequently, printing was performed on 100 sheets with A4 size (ink jet paper, Photo Glossy Paper PT-201; manufactured by Canon Inc.), and the evaluation was performed in accordance with the criteria below.

A: Substantially no print irregularity occurs from start to end of printing.
B: Output with print irregularity occurs at a small number of positions.
C: Outputs with print irregularity occurs at a large number of positions.
D: Print irregularity occurs from start to end of printing.

The test of the ejection stability was performed immediately after the preparation of each dye ink composition and after the dye ink composition was stored in the ink cartridge at 40°C and a relative humidity of 80% for 4 weeks.

In Table 4 below, the results obtained in the cases where a dye ink composition immediately after the preparation was used are shown in the column of "Immediately after preparation of ink". The results obtained in the cases where the test was performed after a dye ink composition was stored in an ink cartridge at 40°C and a relative humidity of 80%

for 4 weeks are shown in the column of "After 4-week mandatory test".

Storage Stability

With regard to each of the inks 1 to 50 for ink jet recording prepared in Examples 1 to 50, the evaluation of storage stability of the ink was performed, as a mandatory test, after the ink was stored at 60°C for 4 weeks and after the ink was stored at 60°C for 10 weeks.
The storage stability was evaluated in two grades. When substantially the same performance as that of the dye ink composition immediately after preparation of the ink was maintained, the ink composition was evaluated as A. When the performance of at least one of the evaluation items (printing density, light resistance, ozone resistance, or ejection stability) deteriorated after the mandatory test, the ink composition was evaluated as B.
The results of Examples are shown in Table 4 below.

Table 4

| | Ejection stability | | Storage stability | |
|---|---|---|---|---|
| | Immediately after preparation of ink | After 4-week mandatory test | After 4-week mandatory test | After 10-week mandatory test |
| Example 1 | A | A | A | B |
| Example 2 | A | A | A | B |
| Example 3 | A | A | A | B |
| Example 4 | A | A | A | B |
| Example 5 | A | A | A | B |
| Example 6 | A | A | A | B |
| Example 7 | A | A | A | B |
| Example 8 | A | A | A | B |
| Example 9 | A | A | A | B |
| Example 10 | A | A | A | B |
| Example 11 | A | A | A | B |
| Example 12 | A | A | A | B |
| Example 13 | A | A | A | B |
| Example 14 | A | A | A | B |
| Example 15 | A | A | A | B |
| Example 16 | A | A | A | B |

(continued)

| | Ejection stability | | Storage stability | |
|---|---|---|---|---|
| | Immediately after preparation of ink | After 4-week mandatory test | After 4-week mandatory test | After 10-week mandatory test |
| Example 17 | A | A | A | B |
| Example 18 | A | A | A | B |
| Example 19 | A | A | A | B |
| Example 20 | A | A | A | B |
| Example 21 | A | A | A | B |
| Example 22 | A | A | A | B |
| Example 23 | A | A | A | B |
| Example 24 | A | A | A | B |
| Example 25 | A | A | A | B |
| Example 26 | A | A | A | B |
| Example 27 | A | A | A | B |
| Example 28 | A | A | A | B |
| Example 29 | A | A | A | B |
| Example 30 | A | A | A | B |
| Example 31 | A | A | A | B |
| Example 32 | A | A | A | B |
| Example 33 | A | A | A | B |
| Example 34 | A | A | A | B |
| Example 35 | A | A | A | B |
| Example 36 | A | A | A | B |
| Example 37 | A | A | A | B |

(continued)

| | Ejection stability | | Storage stability | |
|---|---|---|---|---|
| | Immediately after preparation of ink | After 4-week mandatory test | After 4-week mandatory test | After 10-week mandatory test |
| Example 38 | A | A | A | B |
| Example 39 | A | A | A | B |
| Example 40 | A | A | A | B |
| Example 41 | A | A | A | A |
| Example 42 | A | A | A | A |
| Example 43 | A | A | A | A |
| Example 44 | A | A | A | A |
| Example 45 | A | A | A | A |
| Example 46 | A | A | A | A |
| Example 47 | A | A | A | A |
| Example 48 | A | A | A | A |
| Example 49 | A | A | A | A |
| Example 50 | A | A | A | A |

The above results showed that the cyan dye ink compositions of Examples according to the present invention are dye ink compositions that can form images having high printing density (color developability) on plain paper and ink jet paper and having high durability (light resistance and ozone resistance).

Moreover, the cyan dye ink compositions according to the present invention have good storage stability in long-term storage and achieve high print quality and ejection stability of the ink used after long-term storage.

Accordingly, the dye ink compositions of Examples according to the present invention had high printing density on plain paper (color developability), which served as application to documents. Furthermore, durabilities on ink jet paper (light resistance and ozone resistance of an ink jet printed article), which served as application to photographs, were achieved at a high level, and long-term preservation stability of the dye ink compositions was higher than that in the related art.

The present invention can provide a dye ink composition, a dye ink for ink jet recording, and an ink jet recording method that can form an image having high printing density (in particular, color developability on plain paper) and having high ozone resistance and high light resistance.

The present invention has been described in detail and with reference to particular embodiments. It is obvious for those skilled in the art that various changes and modifications can be made without departing from the spirit and scope of the present invention.

This application is based on JP2019-053700, filed in Japan on March 20, 2019 and JP2019-122360, filed in Japan on June 28, 2019, the contents of which are herein incorporated by reference.

## Claims

**1.** A dye ink composition comprising:

a dye represented by the following general formula (I);
water; and
a compound represented by the following general formula (II),

General formula (I)

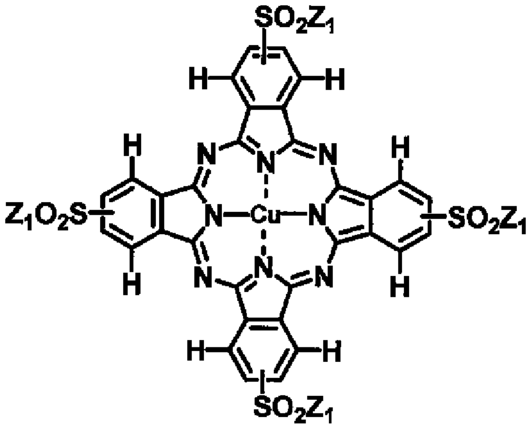

wherein, in the general formula (I), each $Z_1$ represents an alkyl group, a cycloalkyl group, an alkenyl group, an aralkyl group, an aryl group, or a heterocyclic group, the alkyl group, the cycloalkyl group, the alkenyl group, the aralkyl group, the aryl group, and the heterocyclic group having a substituent that includes at least an ionic hydrophilic group,

General formula (II)

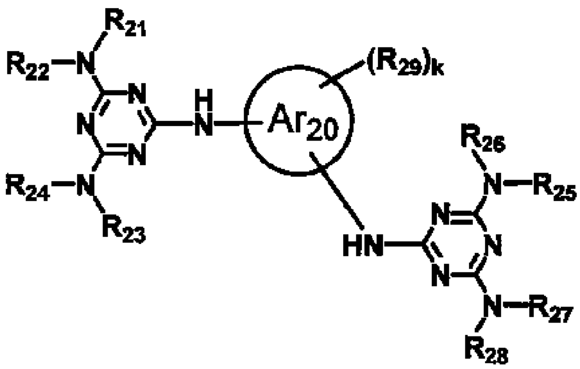

wherein, in the general formula (II), $Ar_{20}$ represents a benzene ring or a naphthalene ring; $R_{21}$ to $R_{28}$ each independently represent a hydrogen atom or a substituent; $R_{21}$ and $R_{22}$ may be linked to each other to form a ring; $R_{23}$ and $R_{24}$ may be linked to each other to form a ring; $R_{25}$ and $R_{26}$ may be linked to each other to form a ring; $R_{27}$ and $R_{28}$ may be linked to each other to form a ring; $R_{29}$ represents a substituent; in a case where $Ar_{20}$ represents the benzene ring, k represents an integer of 0 to 4; in a case where $Ar_{20}$ represents the naphthalene ring, k represents an integer of 0 to 6; in a case where a plurality of $R_{29}$'s are present, the plurality of $R_{29}$'s may be the same as or different from each other; and in a case where a plurality of $R_{29}$'s are present, the plurality of $R_{29}$'s may be linked to each other to form a ring, and
wherein the compound represented by the general formula (II) has at least one hydrophilic group.

**2.** The dye ink composition according to claim 1, further comprising a toning agent represented by the following general formula (Cy-1),

(Cy-1)

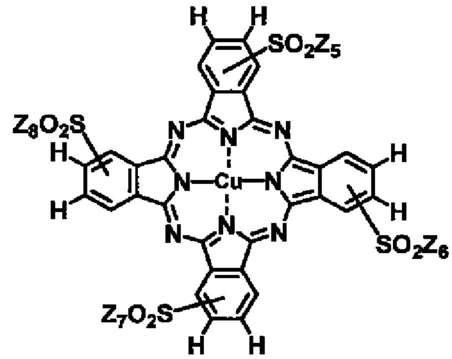

wherein, in the general formula (Cy-1), $Z_5$, $Z_6$, $Z_7$, and $Z_8$ each independently represent a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group; and at least one of $Z_5$, $Z_6$, $Z_7$, or $Z_8$ has a substituent that includes an ionic hydrophilic group.

**3.** The dye ink composition according to claim 1 or 2, further comprising a toning agent represented by any of the following general formulae (Cy-2) to (Cy-5),

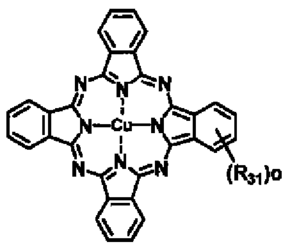

(Cy-2)

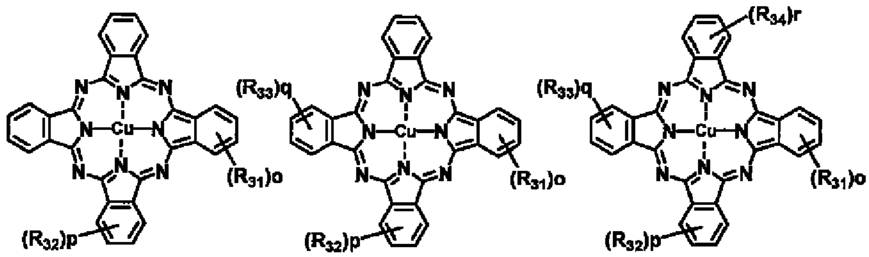

(Cy-3) (Cy-4) (Cy-5)

wherein, in the general formulae (Cy-2) to (Cy-5), $R_{31}$, $R_{32}$, $R_{33}$, and $R_{34}$ each independently represent a substituted or unsubstituted sulfamoyl group, a substituted or unsubstituted carbamoyl group, a sulfo group, or a carboxy group; in a case where a plurality of $R_{31}$'s, $R_{32}$'s, $R_{33}$'s, or $R_{34}$'s are present, the plurality of $R_{31}$'s, $R_{32}$'s, $R_{33}$'s, or $R_{34}$'s may be the same as or different from each other; and o, p, q, and r each independently represent an integer of 1 to 4.

**4.** The dye ink composition according to any one of claims 1 to 3, wherein the compound represented by the general formula (II) has at least one ionic hydrophilic group.

**5.** The dye ink composition according to any one of claims 1 to 4, wherein at least any one of $R_{21}$ to $R_{29}$ in the general formula (II) has an ionic hydrophilic group.

**6.** The dye ink composition according to any one of claims 1 to 5,

wherein a content of the dye represented by the general formula (I) is 3.0% to 5.0% by mass with respect to a total mass of the dye ink composition, and
the dye ink composition is a composition for a cyan dye ink.

**7.** The dye ink composition according to any one of claims 1 to 6,

wherein a content of the compound represented by the general formula (II) is 0.5% to 3.0% by mass with respect to a total mass of the dye ink composition, and
the dye ink composition is a composition for a cyan dye ink.

**8.** The dye ink composition according to any one of claims 1 to 7, further comprising a chelating agent, wherein a content of the chelating agent is 0.001% to 0.3% by mass with respect to a total mass of the dye ink

composition.

**9.** A dye ink for ink jet recording, the dye ink comprising the dye ink composition according to any one of claims 1 to 8.

**10.** An ink jet recording method comprising using the dye ink for ink jet recording according to claim 9.

## INTERNATIONAL SEARCH REPORT

International application No.
PCT/JP2020/011296

A. CLASSIFICATION OF SUBJECT MATTER
Int. Cl. C09B47/20(2006.01)i, B41J2/01(2006.01)i, C09D11/328(2014.01)i, C09D11/38(2014.01)i, B41M5/00(2006.01)i, C09B67/20(2006.01)i, C09B67/44(2006.01)i
FI: C09D11/328, C09D11/38, C09B47/20, C09B67/20 G, C09B67/44 A, B41J2/01 501, B41M5/00 120

According to International Patent Classification (IPC) or to both national classification and IPC

B. FIELDS SEARCHED

Minimum documentation searched (classification system followed by classification symbols)
Int. Cl. C09B47/20, B41J2/01, C09D11/328, C09D11/38, B41M5/00, C09B67/20, C09B67/44

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2005-162823 A (FUJI PHOTO FILM CO., LTD.) 23 June 2005, claims, examples, paragraph [0316], claims, examples, paragraph [0316] | 1, 3-10<br>2 |
| X<br>Y | JP 2009-132891 A (FUJIFILM CORP.) 18 June 2009, claims, examples, paragraphs [0425]-[0428], claims, examples, paragraphs [0425]-[0428] | 1, 3-10<br>2 |
| Y | WO 2014/077291 A1 (FUJIFILM CORP.) 22 May 2014, claims, examples | 2 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21.05.2020 | 02.06.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/011296

| Patent Documents referred to in the Report | Publication Date | Patent Family | Publication Date |
|---|---|---|---|
| JP 2005-162823 A | 23.06.2005 | (Family: none) | |
| JP 2009-132891 A | 18.06.2009 | US 2010/0302305 A1<br>claims, examples, paragraphs [0652]-[0655]<br>WO 2009/057712 A1<br>EP 2206750 A1<br>AU 2008319853 A1<br>CA 2703935 A1<br>CN 101842449 A<br>KR 10-2010-0088603 A | |
| WO 2014/077291 A1 | 22.05.2014 | US 2015/0240096 A1<br>claims, examples<br>EP 2921531 A1<br>CN 104797658 A<br>KR 10-2015-0075093 A<br>TW 201435016 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11158424 A
- JP H11158424 A
- JP 2013035922 A
- JP 2013221054 A
- JP 3949385 B
- JP 4145153 B
- JP 4512543 B
- JP 4854250 B
- JP 4686151 B
- JP 2003306623 A
- JP 59157636 A
- JP S59157636 A
- JP 8169172 A
- JP H08169172 A
- JP 8027693 A
- JP H0827693 A
- JP 2276670 A
- JP H02276670 A
- JP 7276789 A
- JP H07276789 A
- JP 9323475 A
- JP H09323475 A
- JP 62238783 A
- JP S62238783 A
- JP 10153989 A
- JP H10153989 A
- JP 10217473 A
- JP H10217473 A
- JP 10235995 A
- JP H10235995 A
- JP 10337947 A
- JP H10337947 A
- JP 10217597 A
- JP H10217597 A
- JP 2019053700 A
- JP 2019122360 A


### Non-patent literature cited in the description


- **SHIRAI ; KOBAYASHI.** Phthalocyanine -Chemistry and Function. IPC, 1-62
- **C. C. LEZNOFF ; A. B. P. LEVER.** Phthalocyanines - Properties and Applications. VCH, 1-54
- Bokin Bobai Handbook (Antibacterial and antifungal handbook). GIHODO SHUPPAN Co., Ltd, 1986
- **BOKIN-BOBAI-ZAI JITEN.** Encyclopedia of antibacterial and antifungal agents. The Society for Antibacterial and Antifungal Agents